(19) **Europäisches Patentamt / European Patent Office / Office européen des brevets**

(11) **EP 3 633 940 B1**

(12) **EUROPEAN PATENT SPECIFICATION**

(45) Date of publication and mention of the grant of the patent:
**27.04.2022 Bulletin 2022/17**

(21) Application number: **18817882.6**

(22) Date of filing: **13.06.2018**

(51) International Patent Classification (IPC):
**H04L 25/02** $^{(2006.01)}$ **H04L 27/26** $^{(2006.01)}$

(52) Cooperative Patent Classification (CPC):
**H04L 27/2613; H04L 25/0226; H04L 27/262; H04L 27/2614**

(86) International application number:
**PCT/CN2018/091039**

(87) International publication number:
**WO 2018/228426 (20.12.2018 Gazette 2018/51)**

(54) **METHOD AND DEVICE FOR CHANNEL ESTIMATION**

VERFAHREN UND VORRICHTUNG ZUR KANALSCHÄTZUNG

PROCÉDÉ ET DISPOSITIF D'ESTIMATION DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2017 CN 201710444419**

(43) Date of publication of application:
**08.04.2020 Bulletin 2020/15**

(73) Proprietor: **Huawei Technologies Co., Ltd.**
**Longgang District**
**Shenzhen, Guangdong 518129 (CN)**

(72) Inventors:
• **ZHOU, Zhengchun**
**Sichuan 611756 (CN)**
• **YANG, Liu**
**Sichuan 611756 (CN)**
• **YAN, Min**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A2-2013/184671 CN-A- 102 934 405**
**CN-A- 105 991 498 US-A1- 2012 147 997**
**US-A1- 2016 080 127**

• **ARTYOM LOMAYEV (INTEL): "Channel Estimation Field for EDMG OFDM PHY in 11ay", IEEE DRAFT; 11-17-0595-00-00AY-CHANNEL-ESTIMATION-FIEL D-FOR-EDMG-OFDM-PHY-IN-11AY, IEEE-SA MENTOR, PISCATAWAY, NJ USA , vol. 802.11ay 21 April 2017 (2017-04-21), pages 1-18, XP068115730, Retrieved from the Internet: URL:https://mentor.ieee.org/802.11/dcn/17/ 11-17-0595-00-00ay-channel-estimation-fiel d-for-edmg-ofdm-phy-in-11ay.pptx [retrieved on 2017-04-21]**

## Description

### TECHNICAL FIELD

This application relates to the communications field, and more specifically, to a channel estimation method and a system.

### BACKGROUND

A multiple input multiple output (multiple input multiple output, MIMO)-orthogonal frequency division multiplexing (orthogonal frequency division multiplexing, OFDM) technology attracts wide attention due to a series of advantages, and a physical layer of a next-generation wireless local area network (wireless local area network, WLAN) standard 802.11n uses the technology. However, channel state estimation information is a key factor of implementing best detection by a receiver in a MIMO-OFDM system, and channel estimation accuracy directly affects performance of an entire system. Channel estimation can be classified into blind channel estimation, non-blind channel estimation, and semi-blind channel estimation according to whether a pilot (pilot) is used. Channel estimation based on a training sequence has advantages of simple implementation and good performance, and is widely used in various communications systems.

In a frequency domain channel estimation algorithm, because channel estimation is performed in frequency domain, subsequent frequency domain equalization and frequency domain signal detection may be directly performed after channel estimation is performed. This can avoid a time-frequency domain conversion operation after time domain channel estimation is performed. However, because a multi-carrier modulation technology is used in the MIMO-OFDM technology, a biggest disadvantage of the MIMO-OFDM technology is a high peak-to-average ratio. An OFDM signal is displayed as superposition of N mutually orthogonal subcarrier signals in time domain. When all the N subcarrier signals are added in a same phase, the obtained OFDM signal may reach a maximum peak value, and the peak power is N times of average power. A common power amplifier is not linear, and with a limited dynamic range. Therefore, nonlinear distortion may occur in a signal with a relatively large dynamic range, which causes cross-modulation interference and out-of-band radiation between subcarriers, and consequently, performance of the entire system is degraded. Although a probability of occurring a maximum peak-to-average ratio (peak-to-average power ratio, PAPR) is very low, to transmit a signal without distortion, a front-end power amplifier is required to have a large linear range. As a result, the entire system is more difficult to be implemented.

Therefore, a channel estimation method needs to be provided, to reduce a peak-to-average ratio of a channel estimation training sequence and simplify implementation difficulty of a communications system.

US 2016/080127 A1 discloses a method for generating a long training sequence and sending a signal. The method includes: obtaining a plurality of long training sequences according to a system parameter and a preset sequence construction formula, wherein the plurality of long training sequences include a plurality of basic training sequences and a plurality of shift training sequences obtained according to cyclic shift of the basic training sequences; and configuring a mapping rule between a terminal device and a long training sequence, for enabling the terminal device to select a long training sequence as a long training sequence for sending a signal.

US 2012/147997 A1 discloses a preamble generating apparatus used for synchronization of a reception apparatus in an orthogonal frequency division multiplexing system and generating a preamble to be added to a beginning of data at a time of communication, receives preamble length identifying information and position specifying information, and generates a plurality of elements constituting a preamble according to a predetermined sequence based on those information.

Non-patent literature Artyom Lomayev (INTEL): "Channel Estimation Field for EDMG OFDM PHY in 11ay", IEEE DRAFT; vol. 802.1 lay, 21 April 2017 pages 1-18, XP068115730, proposes a design of the channel estimation field for EDMG OFDM PHY in 802.11ay standard.

### SUMMARY

This application provides a method, a related device and a communications system in the independent claims to reduce a peak-to-average ratio of a channel estimation training sequence and simplify implementation difficulty of a communications system. Possible implementation manners are disclosed in the dependent claims. Specific embodiments are defined by the dependent claims. Embodiments which do not fall within the scope of the claims are examples for understanding the present invention.

According to a first aspect, a channel estimation method is provided, including: generating a channel estimation training sequence, where the channel estimation training sequence includes a first subsequence and a second subsequence, the first subsequence includes some elements in a target ZC sequence, and the second subsequence includes elements other than the some elements in the target ZC sequence; and sending the channel estimation training sequence, where a subcarrier carrying the first subsequence and a subcarrier carrying the second subsequence are respectively located on two sides of a direct current subcarrier.

According to the channel estimation method in this application, a channel estimation training sequence is determined based on a Zadoff-Chu (ZC) sequence. By classifying the target ZC sequence into the first subsequence and the second subsequence mapped to subcarriers on two sides of the direct current subcarrier, the channel estimation training sequence can have a relatively low peak-to-average ratio (peak-to-average power ratio, PAPR). This improves accuracy of channel estimation and simplifies implementation difficulty of the communications system.

With reference to the first aspect, in an implementation of the first aspect, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

In other words, in addition to the first subsequence and the second subsequence, the channel estimation training sequence in this application further includes a third subsequence and a fourth subsequence (or referred to as a reserved subcarrier) that are mapped to the guard band subcarrier, and further includes a fifth subsequence that is mapped to the direct current subcarrier. Optionally, elements in the third subsequence, the fourth subsequence, and the fifth subsequence may be 0.

Before determining the channel estimation training sequence, the method further includes: determining a channel estimation training sequence matrix, where the channel estimation training sequence matrix includes M ZC sequences each with a length of $N_{ZC}$, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j; and determining that a row of the channel estimation training sequence matrix is the target ZC sequence.

Optionally, the channel estimation training sequence matrix may be specified in a protocol, or may be generated by the transmit end device.

It may be understood that M ZC sequences each with a length of $N_{ZC}$ may not exist in a matrix form. In addition, if there are a plurality of transmit antennas in the device, the device selects a plurality of ZC sequences from the M ZC sequences to generate a plurality of channel estimation training sequences, to be sent on the plurality of transmit antennas.

Therefore, the channel estimation method in this embodiment of this application can meet a requirement for the channel estimation training sequence in a multi-input multiple output (multiple input multiple output, MIMO) condition of a plurality of channels.

The determining a channel estimation training sequence matrix includes: determining the channel estimation training sequence matrix based on a quantity of bound channels.

For different quantities of bound channels, quantities of reserved subcarriers required by the communications system are different, and therefore total lengths of the first subsequence and the second subsequence in the channel estimation training sequence are also different. Therefore, a plurality of channel estimation training sequence matrices may be preconfigured for different quantities of bound channels, and each quantity of bound channels is corresponding to one channel estimation training sequence matrix. The transmit end device may determine a corresponding channel estimation training sequence matrix based on a configured quantity of bound channels.

Therefore, the channel estimation method in this embodiment of this application can meet a requirement for the channel estimation training sequence in scenarios of different quantities of bound channels.

The determining the channel estimation training sequence matrix based on a quantity of bound channels includes: determining a ZC root sequence based on the quantity of bound channels; and performing phase-shift processing on the ZC root sequence to obtain the channel estimation training sequence matrix, where a phase-shift factor of the phase-shift processing is $e^{j\frac{2\pi lk}{N_{ZC}}}$ , where l = 1, ..., M, and k = 0, ..., $N_{ZC}$ -1.

With reference to the first aspect and the foregoing implementations of the first aspect, in another implementation of the first aspect, a length of the first subsequence is $N_{LS}$, a length of the second subsequence is $N_{RS}$, and $N_{LS}$ and $N_{RS}$ are positive integers, where a first element to an $N_{LSth}$ element in the target ZC sequence are successively a first element to an $N_{LSth}$ element in the first subsequence, and an $(N_{LS}+1)_{th}$ element to an $N_{ZCth}$ element in the target ZC sequence are successively a first element to an $N_{RSth}$ element in the second subsequence.

With reference to the first aspect and the foregoing implementations of the first aspect, in another implementation of the first aspect, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LSth}$ subcarrier in the $N_{LS}$ subcarriers is adjacent to the direct current subcarrier, where s = 1, ..., $N_{LS}$, and a first subcarrier in the $N_{RS}$ subcarriers is adjacent to the direct current subcarrier, where t = 1, ..., $N_{RS}$.

Therefore, correlation of the ZC sequence can be ensured, and a PAPR of the channel estimation training sequence can be reduced.

According to a second aspect, a channel estimation method is provided, including: receiving a channel estimation training sequence, where the channel estimation training sequence includes a first subsequence and a second subsequence, the first subsequence includes some elements in a target ZC scqucncc, the second subsequence includes elements other than the some elements in the target ZC sequence, and a subcarrier carrying the first subsequence and a subcarrier carrying the second subsequence are respectively located on two sides of a direct current subcarrier; and performing channel estimation based on the channel estimation training sequence.

According to the channel estimation method in this application, the channel estimation training sequence received by the receive end device is determined based on the ZC sequence, subcarriers carrying the first subsequence and the second subsequence in the channel estimation training sequence are respectively located on two sides of the direct current subcarrier, and the first subsequence and the second subsequence are respectively corresponding to different elements in the target ZC sequence, so that the channel estimation training sequence can have a relatively low PAPR, thereby improving channel estimation accuracy.

With reference to the second aspect, in an implementation of the second aspect, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

With reference to the second aspect and the foregoing implementations of the second aspect, in another implementation of the second aspect, the target ZC sequence is one of M ZC sequences each with a length of $N_{ZC}$ included in the channel estimation training sequence matrix, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j.

With reference to the second aspect and the foregoing implementations of the second aspect, in another implementation of the second aspect, the channel estimation training sequence matrix is determined based on a quantity of bound channels.

With reference to the second aspect and the foregoing implementations of the second aspect, in another implementation of the second aspect, the channel estimation training sequence matrix is obtained by performing phase-shift processing on the ZC root sequence determined based on the quantity of bound channels, where a phase-shift factor of the phase-shift processing is $e^{j\frac{2\pi lk}{N_{ZC}}}$, where $l$ = 1, ..., M, and $k$ = 0, ..., $N_{ZC}$-1.

With reference to the second aspect and the foregoing implementations of the second aspect, in another implementation of the second aspect, a length of the first subsequence is $N_{LS}$, a length of the second subsequence is $N_{RS}$, and $N_{LS}$ and $N_{RS}$ are positive integers, where a first element to an $N_{LS_{th}}$ element in the target ZC sequence are successively a first element to an $N_{LSth}$ element in the first subsequence, and an $(N_{LS}+1)_{th}$ element to an $N_{ZC_{th}}$ element in the target ZC sequence are successively a first element to an $N_{RSth}$ element in the second subsequence.

With reference to the second aspect and the foregoing implementations of the second aspect, in another implementation of the second aspect, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LS_{th}}$ subcarrier in the $N_{LS}$ subcarriers is adjacent to the direct current subcarrier, where s = 1, ..., $N_{LS}$, and a first subcarrier in the $N_{RS}$ subcarriers is adjacent to the direct current subcarrier, where t = 1, ..., $N_{RS}$.

According to a third aspect, a transmit end device is provided, including: a processing module, configured to determine a channel estimation training sequence, where the channel estimation training sequence includes a first subsequence and a second subsequence, the first subsequence includes some elements in a target ZC sequence, and the second subsequence includes elements other than the some elements in the target ZC sequence; and a transceiver module, configured to send the channel estimation training sequence, where a subcarrier carrying the first subsequence and a subcarrier carrying the second subsequence are respectively located on two sides of a direct current subcarrier.

With reference to the third aspect, in an implementation of the third aspect, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

The processing module is further configured to: determine a channel estimation training sequence matrix, where the channel estimation training sequence matrix includes M ZC sequences each with a length of $N_{ZC}$, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j; and determine that a row of the channel estimation training sequence matrix is the target ZC sequence.

With reference to the third aspect and the foregoing implementations of the third aspect, in another implementation of the third aspect, the processing module is specifically configured to determine the channel estimation training sequence matrix based on a quantity of bound channels.

The processing module is specifically configured to: determine a ZC root sequence based on the quantity of bound channels; and perform phase-shift processing on the ZC root sequence to obtain the channel estimation training sequence matrix, where a phase-shift factor of the phase-shift processing is $e^{j\frac{2\pi lk}{N_{zc}}}$, where $l$ = 1, ..., M, and $k$ = 0, ..., $N_{ZC}$-1.

With reference to the third aspect and the foregoing implementations of the third aspect, in another implementation of the third aspect, a length of the first subsequence is $N_{LS}$, a length of the second subsequence is $N_{RS}$, and $N_{LS}$ and $N_{RS}$ are positive integers, where a first element to an $N_{LSth}$ element in the target ZC sequence are successively a first element to an $N_{LSth}$ element in the first subsequence, and an $(N_{LS}+1)_{th}$ element to an $N_{ZCth}$ element in the target ZC sequence are successively a first element to an $N_{RSth}$ element in the second subsequence.

With reference to the third aspect and the foregoing implementations of the third aspect, in another implementation of the third aspect, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LSth}$ subcarrier in the $N_{LS}$ subcarriers is adjacent to the direct current subcarrier, where s = 1, ..., $N_{LS}$, and a first subcarrier in the $N_{RS}$ subcarriers is adjacent to the direct current subcarrier, where t = 1, ..., $N_{RS}$.

According to a fourth aspect, a receive end device is provided, including: a transceiver module, configured to receive a channel estimation training sequence, where the channel estimation training sequence includes a first subsequence and a second subsequence, the first subsequence includes some elements in a target ZC sequence, the second subsequence includes elements other than the some elements in the target ZC sequence, and a subcarrier carrying the first subsequence and a subcarrier carrying the second subsequence are respectively located on two sides of a direct current subcarrier; and a processing module, configured to perform channel estimation based on the channel estimation training sequence.

With reference to the fourth aspect, in an implementation of the fourth aspect, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

With reference to the fourth aspect and the foregoing implementations of the fourth aspect, in another implementation of the fourth aspect, the target ZC sequence is one of M ZC sequences each with a length of $N_{ZC}$ included in the channel estimation training sequence matrix, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j.

With reference to the fourth aspect and the foregoing implementations of the fourth aspect, in another implementation of the fourth aspect, the channel estimation training sequence matrix is determined based on a quantity of bound channels.

With reference to the fourth aspect and the foregoing implementations of the fourth aspect, in another implementation of the fourth aspect, the channel estimation training sequence matrix is obtained by performing phase-shift processing on the ZC root sequence determined based on the quantity of bound channels, where a phase-shift factor of the phase-shift processing is $e^{j\frac{2\pi lk}{N_{zc}}}$, where $l$ = 1, ..., M, and $k$ = 0, ..., $N_{ZC}$-1.

With reference to the fourth aspect and the foregoing implementations of the fourth aspect, in another implementation of the fourth aspect, a length of the first subsequence is $N_{LS}$, a length of the second subsequence is $N_{RS}$, and $N_{LS}$ and $N_{RS}$ are positive integers, where a first element to an $N_{LSth}$ element in the target ZC sequence are successively a first element to an $N_{LSth}$ element in the first subsequence, and an $(N_{LS}+1)_{th}$ element to an $N_{ZCth}$ element in the target ZC sequence are successively a first element to an $N_{RSth}$ element in the second subsequence.

With reference to the fourth aspect and the foregoing implementations of the fourth aspect, in another implementation of the fourth aspect, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LSth}$ subcarrier in the $N_{LS}$ subcarriers is adjacent to the direct current subcarrier, where s = 1, ..., $N_{LS}$, and a first subcarrier in the $N_{RS}$ subcarriers is adjacent to the direct current subcarrier, where t = 1, ..., $N_{RS}$.

According to a fifth aspect, a transmit end device is provided, including a processor, a memory, and a transceiver. The processor, the memory, and the transceiver communicate with each other by using an inner connection path, and transmit a control signal and/or a data signal, so that the device performs the method in the first aspect or any possible implementation of the first aspect.

According to a sixth aspect, a receive end device is provided, including a processor, a memory, and a transceiver. The processor, the memory, and the transceiver communicate with each other by using an inner connection path, and transmit a control signal and/or a data signal, so that the device performs the method in the second aspect or any possible implementation of the second aspect.

According to a seventh aspect, a computer readable medium is provided to store a computer program. The computer program includes an instruction used to perform the method in the first aspect or any possible implementation of the first aspect.

According to an eighth aspect, a computer readable medium is provided to store a computer program. The computer program includes an instruction used to perform the method in the second aspect or any possible implementation of the second aspect.

According to a ninth aspect, a computer program product including an instruction is provided. When the instruction in the computer program product is run on a computer, the computer performs the channel estimation method in the first aspect or any possible implementation of the first aspect. Specifically, the computer program product may run on the device according to the third aspect or the fifth aspect.

According to a tenth aspect, a computer program product including an instruction is provided. When the instruction in the computer program product is run on a computer, the computer performs the channel estimation method in the second aspect or any possible implementation of the second aspect. Specifically, the computer program product may run on the device according to the fourth aspect or the sixth aspect.

**BRIEF DESCRIPTION OF DRAWINGS**

FIG. 1 is a schematic flowchart of a channel estimation method according to an embodiment of this application;
FIG. 2 is a mapping pattern of a first subsequence and a second subsequence according to an embodiment of this application;
FIG. 3 is a schematic diagram of a channel estimation principle according to an embodiment of this application;
FIG. 4 is a schematic diagram of an orthogonal frequency division multiplexing OFDM symbol according to an embodiment of this application;
FIG. 5 is a mapping pattern of a channel estimation training sequence in a scenario 1 according to an embodiment of this application;
FIG. 6 is an autocorrelation characteristic curve of a channel estimation training sequence when $q$ = 97 in a scenario 1 according to an embodiment of this application;
FIG. 7 is a cross-correlation characteristic curve of a channel estimation training sequence when $q$ = 97 and $q$ = 256 in a scenario 1 according to an embodiment of this application;
FIG. 8 is an autocorrelation characteristic curve of a channel estimation training sequence when $q$ = 213 in a scenario 2 according to an embodiment of this application;
FIG. 9 is a cross-correlation characteristic curve of a channel estimation training sequence when $q$ = 213 and $q$ = 140 in a scenario 2 according to an embodiment of this application;
FIG. 10 is an autocorrelation characteristic curve of a channel estimation training sequence when $q$ = 153 in a scenario 3 according to an embodiment of this application;
FIG. 11 is a cross-correlation characteristic curve of a channel estimation training sequence when $q$ = 153 and $q$ = 140 in a scenario 3 according to an embodiment of this application;
FIG. 12 is a mapping pattern of a channel estimation training sequence in a scenario 4 according to an embodiment of this application;
FIG. 13 is an autocorrelation characteristic curve of a channel estimation training sequence when $q$ = 557 in a scenario 4 according to an embodiment of this application;

FIG. 14 is a cross-correlation characteristic curve of a channel estimation training sequence when $q = 557$ and $q = 210$ in a scenario 4 according to an embodiment of this application;

FIG. 15 is an autocorrelation characteristic curve of a channel estimation training sequence when $q = 313$ in a scenario 5 according to an embodiment of this application;

FIG. 16 is a cross-correlation characteristic curve of a channel estimation training sequence when $q = 313$ and $q = 557$ in a scenario 5 according to an embodiment of this application;

FIG. 17 is an autocorrelation characteristic curve of a channel estimation training sequence when $q = 560$ in a scenario 6 according to an embodiment of this application;

FIG. 18 is a cross-correlation characteristic curve of a channel estimation training sequence when $q = 313$ and $q = 560$ in a scenario 6 according to an embodiment of this application;

FIG. 19 is a mapping pattern of a channel estimation training sequence in a scenario 7 according to an embodiment of this application;

FIG. 20 is an autocorrelation characteristic curve of a channel estimation training sequence when $q = 230$ in a scenario 7 according to an embodiment of this application;

FIG. 21 is a cross-correlation characteristic curve of a channel estimation training sequence when $q = 230$ and $q = 951$ in a scenario 7 according to an embodiment of this application;

FIG. 22 is an autocorrelation characteristic curve of a channel estimation training sequence when $q = 173$ in a scenario 8 according to an embodiment of this application;

FIG. 23 is a cross-correlation characteristic curve of a channel estimation training sequence when $q = 173$ and $q = 230$ in a scenario 8 according to an embodiment of this application;

FIG. 24 is an autocorrelation characteristic curve of a channel estimation training sequence when $q = 1138$ in a scenario 9 according to an embodiment of this application;

FIG. 25 is a cross-correlation characteristic curve of a channel estimation training sequence when $q = 230$ and $q = 1138$ in a scenario 9 according to an embodiment of this application;

FIG. 26 is a mapping pattern of a channel estimation training sequence in a scenario 10 according to an embodiment of this application;

FIG. 27 is an autocorrelation characteristic curve of a channel estimation training sequence when $q = 1321$ in a scenario 10 according to an embodiment of this application;

FIG. 28 is a cross-correlation characteristic curve of a channel estimation training sequence when $q = 1321$ and $q = 276$ in a scenario 10 according to an embodiment of this application;

FIG. 29 is an autocorrelation characteristic curve of a channel estimation training sequence when $q = 770$ in a scenario 11 according to an embodiment of this application;

FIG. 30 is a cross-correlation characteristic curve of a channel estimation training sequence when $q = 1321$ and $q = 770$ in a scenario 11 according to an embodiment of this application;

FIG. 31 is an autocorrelation characteristic curve of a channel estimation training sequence when $q = 1378$ in a scenario 12 according to an embodiment of this application;

FIG. 32 is a cross-correlation characteristic curve of a channel estimation training sequence when $q = 1378$ and $q = 1321$ in a scenario 12 according to an embodiment of this application;

FIG. 33 is a schematic block diagram of a transmit end device according to an embodiment of this application;

FIG. 34 is a schematic block diagram of a receive end device according to another embodiment of this application;

FIG. 35 is a schematic block diagram of a transmit end device according to still another embodiment of this application; and

FIG. 36 is a schematic block diagram of a receive end device according to still another embodiment of this application.

## DESCRIPTION OF EMBODIMENTS

The following describes technical solutions of this application with reference to accompanying drawings.

A channel estimation method in the embodiments of this application may be applied to a wireless local area network (wireless local area network, WLAN), or may be applied to other various communications systems such as a global system for mobile communications (global system of mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, and a future communications system.

A transmit end device in the embodiments of this application may be a base station, and the base station may include various forms such as a macro base station, a micro base station, a relay station, or an access point. In systems that use different radio access technologies, devices that have a base station function may have different names. For example, in an LTE network, a device that has a base station function is referred to as an evolved NodeB (evolved NodeB, eNB or eNodeB), in a third generation (3rd generation, 3G) network, a device that has a base station function is referred to as a NodeB (Node B), and the like.

In the embodiments of this application, a receive end device may be a terminal device, and the terminal device may include but is not limited to a mobile station (mobile station, MS), a mobile terminal (mobile terminal), a mobile phone (mobile phone), user equipment (user equipment, UE), a handset (handset), portable equipment (portable equipment), a vehicle (vehicle), and the like. The terminal device may communicate with one or more core networks by using a radio access network (radio access network, RAN). For example, the terminal device may be a mobile phone (or referred to as a "cellular" phone), or a computer having a wireless communication function. The terminal device may further be a portable, pocket-sized, handheld, computer built-in, or in-vehicle mobile apparatus.

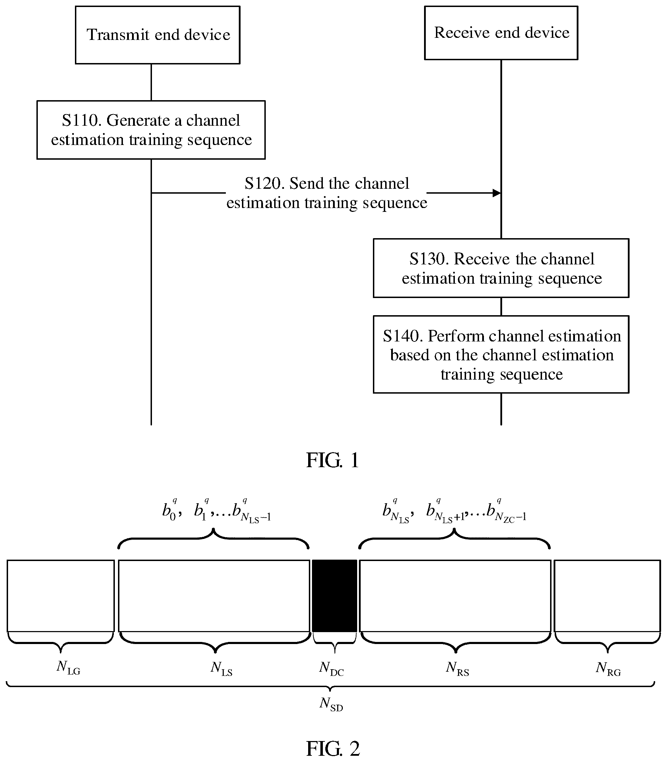

FIG. 1 is a schematic flowchart for channel estimation according to an embodiment of this application. As shown in FIG. 1, a method 100 includes the following steps.

S110. A transmit end device generates a channel estimation training sequence, where the channel estimation training sequence includes a first subsequence and a second subsequence, the first subsequence includes some elements in a target ZC sequence, and the second subsequence includes elements other than the some elements in the target ZC sequence.

Optionally, in some embodiments, if the transmit end device sends the channel estimation training sequence to a receive end device by using only one transmit antenna, the transmit end device determines a length $N_{ZC}$ of the target ZC sequence based on a total length of the first subsequence and the second subsequence, and selects different constructing manners based on a parity of $N_{ZC}$ to generate the target ZC sequence. When $N_{ZC}$ is an odd number, a ($k$

+ 1)$^{th}$ element in the target ZC sequence is $\exp(j\dfrac{\pi u k(k+1)}{N_{ZC}})$ , and when $N_{ZC}$ is an even number, a ($k$ + 1)$^{th}$ element in the target ZC sequence is $\exp(j\dfrac{\pi u k^2}{N_{ZC}})$ , where gcd $(u, N_{ZC}) = 1$, $k = 0, 1, 2, ..., N_{ZC}-1$, and gcd () is a function of returning a greatest common divisor of two or more integers.

Further, because the target ZC sequence is a value in a unit circle, if a value of $u$ is very large, a sequence obtained after the phase shift is the same as the foregoing sequence, which affects sequence correlation. To obtain better correlation, $u = 1$ in this embodiment of this application. Optionally, in some other embodiments, the transmit end device and the receive end device communicate with each other by using a multiple-input multiple-output (multiple-input multiple-output, MIMO) technology, and the transmit end device sends the channel estimation training sequence to the receive end device by using a plurality of transmit antennas. The transmit end device determines the channel estimation training sequence based on a target ZC sequence selected from an orthogonal ZC sequence matrix. The orthogonal ZC sequence matrix herein may be preconfigured in a protocol, or may be generated by the transmit end device.

Specifically, in some embodiments, the transmit end device generates the orthogonal ZC sequence matrix, and determines the channel estimation training sequence based on the target ZC sequence selected from the orthogonal ZC sequence matrix. For example, if the transmit end device determines that a length of the channel estimation training sequence is $N_{SD}$, and the total length of the first subsequence and the second subsequence is $N_{ZC}$, the channel estimation training sequence needs to meet a relationship shown in Formula (1):

$$\mathbf{M}\ (n) = \begin{cases} 0, & 1 \le n \le N_{LG} \\ 0, & N_{SD} - N_{RG} + 1 \le n \le N_{SD} \\ 0, & n = N_{DC0} \ , \ N_{DC1} \ , \ N_{DC2} \\ b_k^q, & others \end{cases} \qquad (1)$$

n represents an n$^{th}$ element in the channel estimation training sequence, or is understood as an n$^{th}$ location, $N_{LG}$ and $N_{RG}$ respectively represent a quantity of reserved subcarriers on a left side and a right side of the channel estimation training sequence, $N_{DC0}$, $N_{DC1}$, and $N_{DC2}$ respectively represent locations of a direct current subcarrier 0, a direct current subcarrier 1, and a direct current subcarrier 2 in the channel estimation training sequence, $q$ represents a $q^{th}$ sequence, k = 0, 1, 2, ..., $N_{ZC}$-1, and k + 1 represents a $k^{th}$ element in the $q^{th}$ sequence. Therefore, a length of a sequence $b_k^q$ that needs to be designed (the total length of the first subsequence and the second subsequence, or a length $N_{ZC}$ of the target ZC sequence) meets Formula (2):

$$N_{ZC} = N_{SD} - N_{LG} - N_{RG} - N_{DC} = N_{LS} + N_{RS} \qquad (2)$$

$N_{DC}$ is a quantity of direct current subcarriers, $N_{LS}$ may be understood as a length of the first subsequence, and $N_{RS}$ may be understood as a length of the second subsequence.

A sequence $b_k^q$ with a length of $N_{ZC}$ can be generated in the following steps.

(a) Determine a parity of $N_{ZC}$, and select different constructing manners based on the parity to generate a ZC root sequence. When $N_{ZC}$ is an odd number, the root sequence $a_k = \exp(j\dfrac{\pi u k(k+1)}{N_{ZC}})$ , and when $N_{ZC}$ is an even number, the root sequence $a_k = \exp(j\dfrac{\pi u k^2}{N_{ZC}})$ , where gcd $(u, N_{ZC})$=1, k=0,1,2,..., $N_{ZC}$-1, and an autocorrelation function of the root sequence $R_{a_k,a_k}(\tau) = \begin{cases} \Sigma_{k=0}^{N_{ZC}-1} a_k * a_k, & \tau=0 \\ 0, & \tau \neq 0 \end{cases}$ .

When  $u$  =  1  and  $N_{ZC}$  is  an  odd  number,  the  ZC  root  sequence  $a_k$  is

$$\begin{bmatrix} 1 & e^{j\frac{2\pi}{N_{ZC}}} & e^{j\frac{6\pi}{N_{ZC}}} & e^{j\frac{12\pi}{N_{ZC}}} \cdots\cdots & e^{j\frac{(N_{ZC}-1)N_{ZC}\pi}{N_{ZC}}} \end{bmatrix}_{1\times N_{ZC}}$$ , and when u = 1 and $N_{ZC}$ is an even number, the ZC

root sequence $a_k$ is $$\begin{bmatrix} 1 & e^{j\frac{\pi}{N_{ZC}}} & e^{j\frac{4\pi}{N_{ZC}}} & e^{j\frac{9\pi}{N_{ZC}}} \cdots\cdots & e^{j\frac{(N_{ZC}-1)^2\pi}{N_{ZC}}} \end{bmatrix}_{1\times N_{ZC}}$$ .

(b) Perform linear phase-shift processing on the ZC root sequence $a_k$ , a phase-shift factor of the phase shift is $\exp(j\dfrac{2\pi q k}{N_{ZC}})$ , and therefore the sequence $b_k^q$ may be represented as $b_k^q = a_k * \exp(j\dfrac{2\pi q k}{N_{ZC}})$ . q = 1, 2, ..., $N_{ZC}$, k = 0, 1, 2, ..., $N_{ZC}$-1. $\exp(j\dfrac{2\pi q k}{N_{ZC}}) = W_{N_{ZC}}^{qk}$ , and $\exp(j\dfrac{\pi u k^2}{N_{ZC}}) = W_{N_{ZC}}^{uk^2/2}$ . When $N_{ZC}$ is an even number, the orthogonal ZC matrix formed by the sequence $b_k^q$ may be considered as a Hadamard (Hadamard) product obtained by multiplying a matrix formed by $W_{N_{ZC}}^{qk}$ by a matrix formed by $W_{N_{ZC}}^{uk^2/2}$ . Specifically, the following orthogonal ZC sequence matrix may be obtained:

$$
\begin{bmatrix} b_k^1 \\ b_k^2 \\ b_k^3 \\ \vdots \\ b_k^{N_{ZC}} \end{bmatrix} =
\begin{bmatrix}
W_{N_{ZC}}^{u*\frac{0^2}{2}} & W_{N_{ZC}}^{u*\frac{1^2}{2}} & W_{N_{ZC}}^{u*\frac{2^2}{2}} & \cdots & W_{N_{ZC}}^{u*\frac{(N_{ZC}-1)^2}{2}} \\
W_{N_{ZC}}^{u*\frac{0^2}{2}} & W_{N_{ZC}}^{u*\frac{1^2}{2}} & W_{N_{ZC}}^{u*\frac{2^2}{2}} & \cdots & W_{N_{ZC}}^{u*\frac{(N_{ZC}-1)^2}{2}} \\
& \ddots & & & \\
W_{N_{ZC}}^{u*\frac{0^2}{2}} & W_{N_{ZC}}^{u*\frac{1^2}{2}} & W_{N_{ZC}}^{u*\frac{2^2}{2}} & \cdots & W_{N_{ZC}}^{u*\frac{(N_{ZC}-1)^2}{2}}
\end{bmatrix}
*
\begin{bmatrix}
W_{N_{ZC}}^{1*0} & W_{N_{ZC}}^{1*1} & W_{N_{ZC}}^{1*2} & \cdots\cdots & W_{N_{ZC}}^{1*(N_{ZC}-1)} \\
W_{N_{ZC}}^{2*0} & W_{N_{ZC}}^{2*1} & W_{N_{ZC}}^{2*2} & \cdots\cdots & W_{N_{ZC}}^{2*(N_{ZC}-1)} \\
& \ddots & & & \\
W_{N_{ZC}}^{N_{ZC}*0} & W_{N_{ZC}}^{N_{ZC}*1} & W_{N_{ZC}}^{N_{ZC}*2} & \cdots & W_{N_{ZC}}^{N_{ZC}*(N_{ZC}-1)}
\end{bmatrix}
$$

$$
=
\begin{bmatrix}
W_{N_{ZC}}^{u*\frac{0^2}{2}}*W_{N_{ZC}}^{1*0} & W_{N_{ZC}}^{u*\frac{1^2}{2}}*W_{N_{ZC}}^{1*1} & W_{N_{ZC}}^{u*\frac{2^2}{2}}*W_{N_{ZC}}^{1*2} & \cdots\cdots & W_{N_{ZC}}^{u*\frac{(N_{ZC}-1)^2}{2}}*W_{N_{ZC}}^{1*(N_{ZC}-1)} \\
W_{N_{ZC}}^{u*\frac{0^2}{2}}*W_{N_{ZC}}^{2*0} & W_{N_{ZC}}^{u*\frac{1^2}{2}}*W_{N_{ZC}}^{2*1} & W_{N_{ZC}}^{u*\frac{2^2}{2}}*W_{N_{ZC}}^{2*2} & \cdots\cdots & W_{N_{ZC}}^{u*\frac{(N_{ZC}-1)^2}{2}}*W_{N_{ZC}}^{2*(N_{ZC}-1)} \\
& \ddots & & & \\
W_{N_{ZC}}^{u*\frac{0^2}{2}}*W_{N_{ZC}}^{N_{ZC}*0} & W_{N_{ZC}}^{u*\frac{1^2}{2}}*W_{N_{ZC}}^{N_{ZC}*1} & W_{N_{ZC}}^{u*\frac{2^2}{2}}*W_{N_{ZC}}^{N_{ZC}*2} & \cdots & W_{N_{ZC}}^{u*\frac{(N_{ZC}-1)^2}{2}}*W_{N_{ZC}}^{N_{ZC}*(N_{ZC}-1)}
\end{bmatrix}
$$

It can be learned that each row may be used as the target ZC sequence. The orthogonal ZC sequence matrix includes $N_{ZC}$ ZC sequences each with a length of $N_{ZC}$, and any two rows of the orthogonal ZC sequence matrix are orthogonal, namely,

$$
R_{b_k^i,b_k^j}(\tau) = \begin{cases} \Sigma_{k=0}^{N_{ZC}-1} b_k^i * b_k^j, & i=j \\ 0, & i \neq j \end{cases} .
$$

It may be understood that if the transmit end device has a plurality of transmit antennas, the transmit end device may select a plurality of target ZC sequences from the orthogonal ZC sequence matrix, generate a plurality of channel estimation training scqucnccs, and send the plurality of generated channel estimation training sequences by using the plurality of antennas.

S120. The transmit end device sends the channel estimation training sequence, where a subcarrier carrying the first subsequence and a subcarrier carrying the second subsequence are respectively located on two sides of a direct current subcarrier.

It should be noted that a subcarrier carrying the first subsequence and a subcarrier carrying the second subsequence are respectively located on two sides of the direct current subcarrier is specifically: a carrier frequency of a subcarrier on a left side of the direct current subcarrier is lower than a carrier frequency of the direct current subcarrier, and a carrier frequency of a subcarrier on a right side of the direct current subcarrier is higher than the carrier frequency of the direct current subcarrier.

Specifically, in some embodiments, the transmit end device may map the first subsequence and the second subsequence in the channel estimation training sequence to one transmit antenna of the transmit end device according to the method shown in FIG. 2. The first subsequence includes first $N_{LS}$ elements $(b_0^q, b_1^q, ..., b_{N_{LS}-1}^q)$ of the sequence $b_k^q$, and the second subsequence includes last $N_{RS}$ elements $(b_{N_{LS}}^q, b_{N_{LS}+1}^q, ..., b_{N_{ZC}-1}^q)$ of the sequence $b_k^q$.

S130. The receive end device receives the channel estimation training sequence.

S140. The receive end device performs channel estimation based on the channel estimation training sequence.

Specifically, in some embodiments, if the transmit end device sends the channel estimation training sequence to the receive end device by using only one transmit antenna, when receiving the channel estimation training sequence, the receive end device performs a correlation operation on the received channel estimation training sequence and the channel estimation training sequence sent by the transmit end device on the transmit antenna, to obtain a link channel gain between the transmit antenna and a receive antenna.

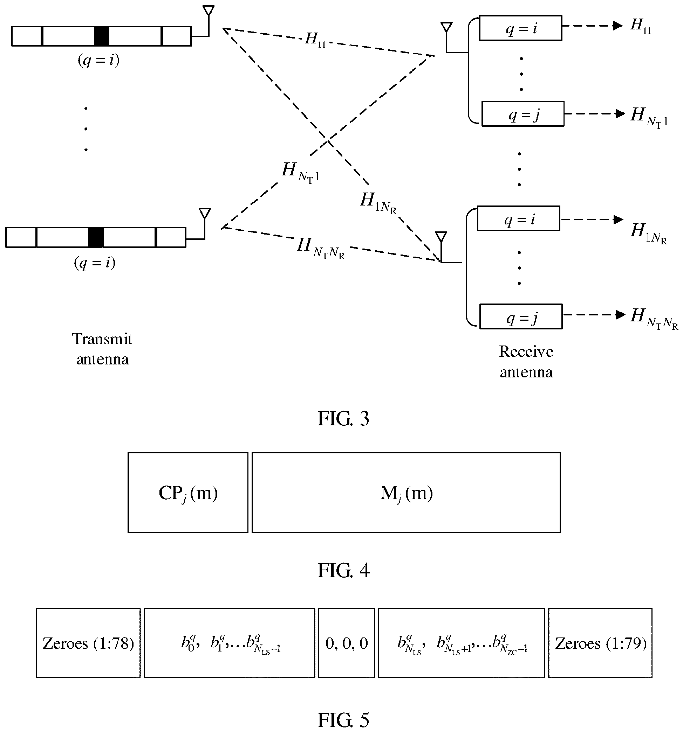

Specifically, in some other embodiments, if the transmit end device and the receive end device communicate with each other by using a multiple-input multiple-output MIMO technology, the transmit end device sends the channel estimation training sequence to the receive end device by using $N_T$ transmit antennas. As shown in FIG. 3, after receiving the channel estimation training sequence by using $N_R$ receive antennas, the receive end device performs a correlation operation on a channel estimation training sequence received by each receive antenna and a channel estimation training sequence sent by the transmit end device on the $N_T$ transmit antennas, to obtain $N_T \times 1$ link channel gains ($H_{nm}$, n=**1**,**2**,..., $N_T$) of the $N_T$ transmit antennas and a current receive antenna $m$. All channel estimation results of the $N_R$ receive antennas are an entire $N_R \times N_T$ channel estimation result. In FIG. 3, $q$ = A (for example, $i$, $j$ in the figure) indicates that the channel estimation training sequence is determined based on a ZC sequence in an $A^{th}$ row of the foregoing orthogonal ZC sequence matrix, and values of $q$ corresponding to different transmit antennas are different.

Specifically, in some embodiments, a channel estimation training sequence sent on a $j^{th}$ transmit antenna is $M_j$ = { $zeroes$(1, $N_{LG}$) $b^j$(0:$N_{LS}$-1) 0 0 0 $b^j$($N_{LS}$:$N_{ZC}$-1) $zeroes$(1, $N_{RG}$) }. It is assumed that a frequency domain training symbol of an orthogonal frequency division multiplexing (orthogonal frequency division multiplexing, OFDM) symbol sent on the $j^{th}$ transmit antenna on a $k^{th}$ subcarrier is $M_j$ ($k$), and a channel frequency response from the $j^{th}$ transmit antenna to an $i^{th}$ receive antenna is $H_{ij}(k)$. In addition, it is assumed that the channel is a slow fading channel, in other words, a channel frequency response of a same transmit/receive antenna on a same subcarrier of each OFDM symbol remains unchanged. It is specified that one OFDM symbol has $N_{SD}$ subcarriers, to avoid an effect of a delay on channel estimation accuracy in a transmitting process, after performing parallel-to-serial on the channel estimation training sequence, the transmit end device inserts a cyclic prefix (cyclic prefix, CP) with a length of $N_{SD}$/4 into the channel estimation training sequence. Therefore, an m$^{th}$ OFDM symbol of the $j^{th}$ transmit antenna is specifically shown in FIG. 4 before entering the channel. After receiving data, the receive end device first removes the CP, and performs N-point inverse fast fourier transform (inverse fast fourier transform, IFFT) processing to obtain IFFT data with a length of N. Information about the m$^{th}$ OFDM symbol that is received by the $i^{th}$ receive antenna on the $k^{th}$ subcarrier is shown in Formula (3):

$$Y_m^i(k) = \sum_{j=0}^{N_T} H^{ij}(k) M_j(k) \qquad (3)$$

The receive end device may obtain a channel frequency response $H^{ij}(k)$ between the $j^{th}$ transmit antenna and the $i^{th}$ receive antenna by using a frequency domain channel estimation method by solving Formula (3).

The following describes the channel estimation method according to the embodiments of this application with reference to specific scenarios. When a specific embodiment is described, 802.11ay is used as an example. For different quantities of bound channels, a total quantity of subcarriers, a quantity of reserved subcarriers, and the like are different. For details, refer to Table 1. For different quantities $N_{CB}$ of bound channels, Table 1 shows a total quantity $N_{SD}$ (total number of subcarriers) of subcarriers, a quantity $N_{DC}$ (number of DC subcarriers) of direct current subcarriers, a quantity $N_{LG}$ (number of zeroes in the left guard band) of zeroes in a left guard band, a quantity $N_{RG}$ (number of zeroes in the right guard band) of zeroes in a right guard band, a quantity $N_{LS}$ (number of EDMG OFDM CEF in the left side) of enhance directional multi-gigabit (enhance directional multi-gigabit, EDMG) OFDM channel estimation fields (channel estimation filed, CEF) in a left side, a quantity $N_{RS}$ (number of EDMG OFDM CEF in the right side) of enhance directional multi-gigabit OFDM channel estimation fields in a right side, and a length $N=N_{LS}+N_{RS}$ (EDMG OFDM-CEF sequence size) of an EDMG OFDM-CEF sequence (sequence).

**Table 1**

| Parameter | $N_{CB}$ = 1 | $N_{CB}$ = 2 | $N_{CB}$ = 3 | $N_{CB}$ = 4 |
|---|---|---|---|---|
| $N_{SD}$ | 512 | 1024 | 1536 | 2048 |
| $N_{DC}$ | 3 | 3 | 3 | 3 |
| $N_{LG}$ | 78 | 127 | 176 | 224 |
| $N_{RG}$ | 79 | 128 | 177 | 225 |
| $N_{LS}$ | 176 | 383 | 590 | 798 |
| $N_{RS}$ | 176 | 383 | 590 | 798 |
| $N_{ZC}=N_{LS}+N_{RS}$ | 352 | 766 | 1180 | 1596 |

Scenario 1:

A quantity of bound channels in a communications system $N_{CB} = 1$, a quantity of MIMO antennas $N_T = 2$. It can be learned from Table 1 that a length of the channel estimation training sequence $N_{SD} = 512$, a length of the sequence $b_k^q$ $N_{ZC}=N_{LS}+N_{RS}=352$, and the channel estimation training sequence meets a relationship shown in Formula (4):

$$M(n) = \begin{cases} 0, & 1 \leq n \leq 78 \\ 0, & 434 \leq n \leq 512 \\ 0, & n = N_{DC0}, N_{DC1}, N_{DC2} \\ b_q^k, & others \end{cases} \quad (4)$$

Because Nzc is an even number, a ZC root sequence $a_k$ is:

$$a_k = \begin{bmatrix} 1 & e^{j\frac{\pi}{352}} & e^{j\frac{4\pi}{352}} & e^{j\frac{9\pi}{352}} \dots \dots & e^{j\frac{351^2\pi}{352}} \end{bmatrix}_{1\times352}.$$

According to the foregoing method for generating the orthogonal ZC sequence matrix, the transmit end device performs linear phase-shift processing on the ZC root sequence $a_k$, a phase-shift factor of the phase shift is $\exp(j\frac{2\pi qk}{352})$, and therefore the sequence $b_k^q$ may be represented as $b_k^q = a_k * \exp(j\frac{2\pi qk}{352})$, and the following orthogonal ZC sequence matrix may be obtained:

$$\begin{bmatrix} b_k^1 \\ b_k^2 \\ b_k^3 \\ \vdots \\ b_k^{352} \end{bmatrix} = \begin{bmatrix} b_0^1 & b_1^1 & \dots b_{N_{LS}}^1 & b_{N_{LS+1}}^1 & \cdots & b_{N_{ZC+1}}^1 \\ b_0^2 & b_1^2 & \dots b_{N_{LS}}^2 & b_{N_{LS+1}}^2 & \cdots & b_{N_{ZC+1}}^2 \\ \ddots & & & & & \\ b_0^{352} & b_1^{352} & \dots b_{N_{LS}}^{352} & b_{N_{LS+1}}^{352} & \cdots & b_{N_{ZC+1}}^{352} \end{bmatrix}.$$

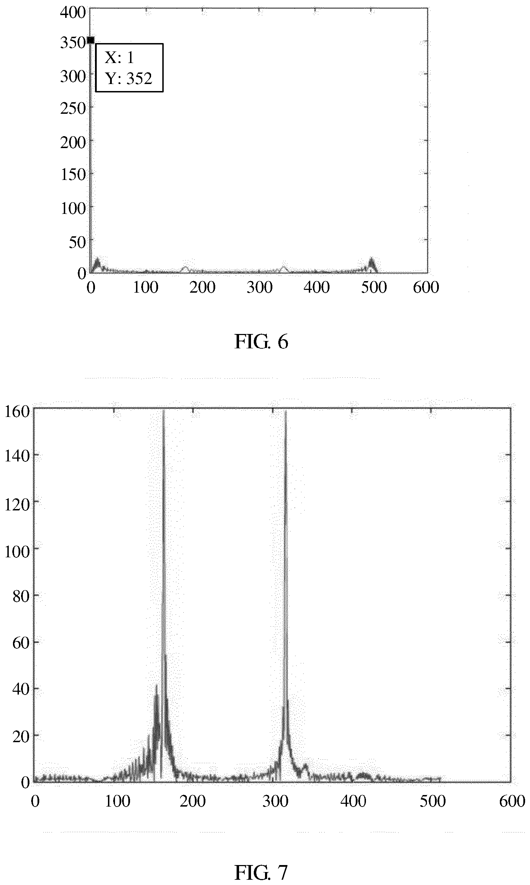

A guard band with a length of 78, a guard band with a length of 79, and three intermediate direct current subcarriers $N_{DC}$ are respectively added to two sides of a row sequence of the orthogonal ZC sequence matrix to form a frequency domain channel estimation training sequence. A pattern of each channel estimation training sequence is shown in FIG. 5. Table 2 shows a PAPR value of the frequency domain channel estimation training sequence determined according to a ZC sequence of $q = 97$ and a ZC sequence of $q = 256$ when $u = 1$. It may be learned that the channel estimation training sequence in this embodiment of this application has a relatively small PAPR. FIG. 6 and FIG. 7 respectively show an autocorrelation characteristic of the frequency domain channel estimation training sequence determined according to the ZC sequence of $q = 97$, and a cross-correlation characteristic between frequency domain channel estimation training sequences determined according to the ZC sequence of $q = 97$ and the ZC sequence of $q = 256$. It may be learned that the channel estimation training sequence in this embodiment of this application has a good autocorrelation characteristic and cross-correlation characteristic.

**Table 2**

| q | PAPR |
|---|---|
| 97 | 2.5323 |
| 256 | 2.5323 |

Scenario 2:

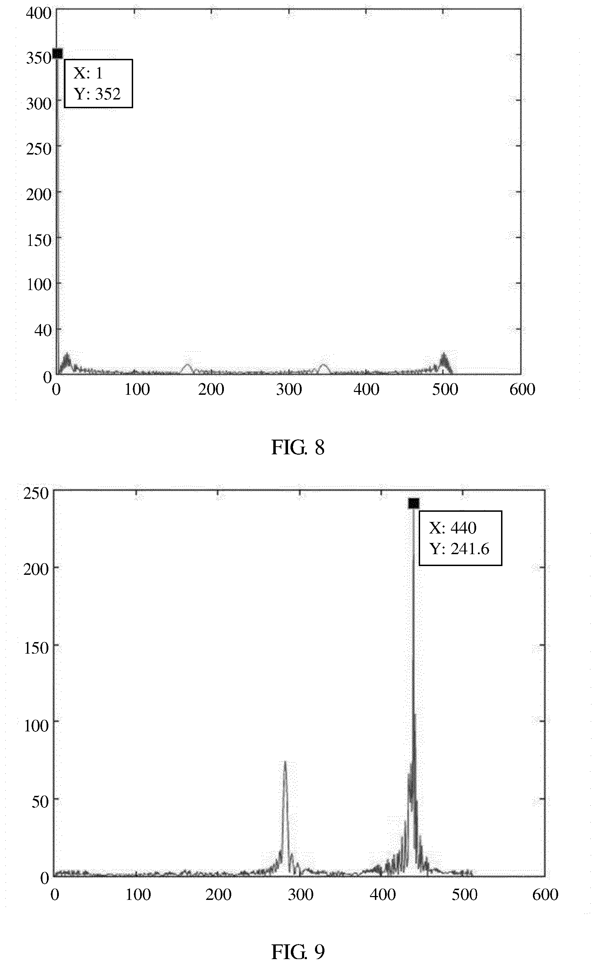

A quantity of bound channels in a communications system $N_{CB}$ = 1, a quantity of MIMO antennas $N_T$ = 4. It can be learned from Table 1 that a length of the channel estimation training sequence $N_{SD}$ = 512, and a length of the sequence $b_k^q$ $N_{ZC} = N_{LS} + N_{RS} = 352$ . The transmit end device may select four ZC sequences from the orthogonal ZC sequence matrix generated in the scenario 1, generate four frequency domain channel estimation training sequences based on the four selected ZC sequences, and separately map the four channel estimation training sequences to subcarriers of different transmit antennas by using a pattern same as the pattern shown in FIG. 5. Table 3 shows a PAPR value of the frequency domain channel estimation training sequence determined according to a ZC sequence of $q$ = 97, a ZC sequence of $q$ = 256, a ZC sequence of $q$ = 213, and a ZC sequence of $q$ = 140 when $u$ = 1. It may be learned that the channel estimation training sequence in this embodiment of this application has a relatively small PAPR. FIG. 8 and FIG. 9 respectively show an autocorrelation characteristic of the frequency domain channel estimation training sequence determined according to the ZC sequence of $q$ = 213, and a cross-correlation characteristic between frequency domain channel estimation training sequences determined according to the ZC sequence of $q$ = 213 and the ZC sequence of $q$ = 140. It may be learned that the channel estimation training sequence in this embodiment of this application has a good autocorrelation characteristic and cross-correlation characteristic.

**Table 3**

| $q$ | PAPR |
|-----|------|
| 97 | 2.5323 |
| 256 | 2.5323 |
| 213 | 2.5421 |
| 140 | 2.5421 |

Scenario 3:

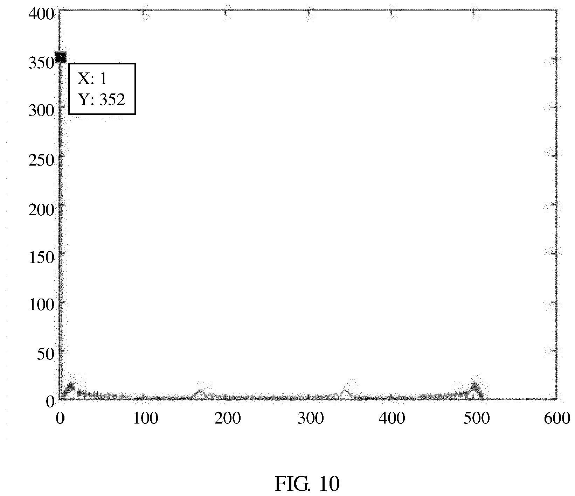

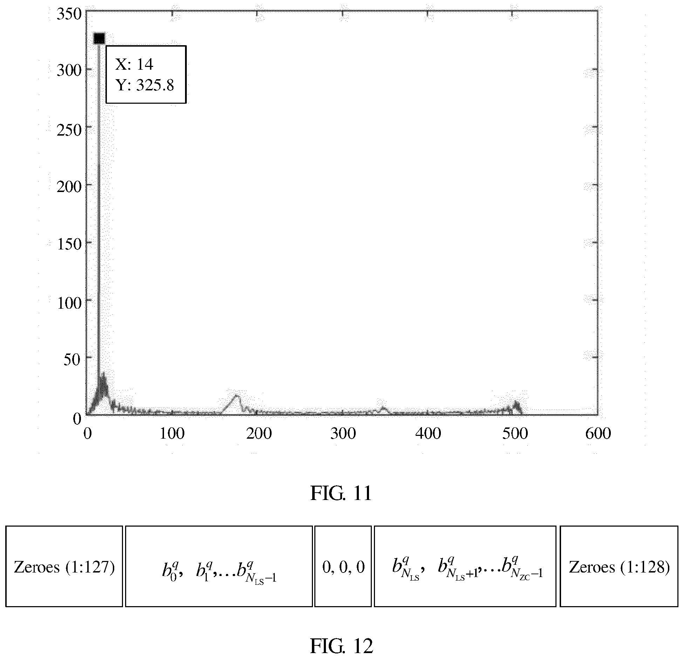

A quantity of bound channels in a communications system $N_{CB}$ = 1, a quantity of MIMO antennas $N_T$ = 8. It can be learned from Table 1 that a length of the channel estimation training sequence $N_{SD}$ = 512, and a length of the sequence $b_k^q$ $N_{ZC} = N_{LS} + N_{RS} = 352$ . The transmit end device may select eight ZC sequences from the orthogonal ZC sequence matrix generated in the scenario 1, generate eight frequency domain channel estimation training sequences based on the eight selected ZC sequences, and separately map the eight channel estimation training sequences to subcarriers of different transmit antennas by using a pattern same as the pattern shown in FIG. 5. Table 4 shows a PAPR value of the frequency domain channel estimation training sequence determined according to a ZC sequence of $q$ = 97, a ZC sequence of $q$ = 256, a ZC sequence of $q$ = 213, a ZC sequence of $q$ = 140, a ZC sequence of $q$ = 153, a ZC sequence of $q$ = 200, a ZC sequence of $q$ = 269, and a ZC sequence of $q$ = 84 when $u$ = 1. It may be learned that the channel estimation training sequence in this embodiment of this application has a relatively small PAPR. FIG. 10 and FIG. 11 respectively show an autocorrelation characteristic of the frequency domain channel estimation training sequence determined according to the ZC sequence of $q$ = 153, and a cross-correlation characteristic between frequency domain channel estimation training sequences determined according to the ZC sequence of $q$ = 153 and the ZC sequence of $q$ = 140. It may be learned that the channel estimation training sequence in this embodiment of this application has a good autocorrelation characteristic and cross-correlation characteristic.

**Table 4**

| $q$ | PAPR |
|-----|------|
| 97 | 2.5323 |
| 256 | 2.5323 |
| 213 | 2.5421 |
| 140 | 2.5421 |
| 153 | 2.5423 |

(continued)

| q | PAPR |
|---|---|
| 200 | 2.5423 |
| 169 | 2.5467 |
| 84 | 2.5467 |

Scenario 4:

A quantity of bound channels in a communications system $N_{CB}$ = 2, a quantity of MIMO antennas $N_T$ = 2. It can be learned from Table 1 that a length of the channel estimation training sequence $N_{SD}$ = 1024, a length of the sequence $b_k^q$ $N_{ZC}$=$N_{LS}$+$N_{RS}$=766, and the channel estimation training sequence meets a relationship shown in Formula (5):

$$M\ (n)=\begin{cases}0, & 1\le n\le 127\\0, & 897\le n\le 1024\\0, & n=N_{DC0}\ ,\ N_{DC1}\ ,\ N_{DC2}\\b_k^q, & others\end{cases} \tag{5}$$

Because Nzc is an even number, a ZC root sequence $a_k$ is:

$$a_k=\begin{bmatrix}1 & e^{j\frac{\pi}{766}} & e^{j\frac{4\pi}{766}} & e^{j\frac{9\pi}{766}}\cdots\ \cdots & e^{j\frac{765^2\pi}{766}}\end{bmatrix}_{1\times 766}.$$

According to the foregoing method for generating the orthogonal ZC sequence matrix, the transmit end device performs linear phase-shift processing on the ZC root sequence $a_k$, a phase-shift factor of the phase shift is $\exp(j\frac{2\pi qk}{766})$, and therefore the sequence $b_k^q$ may be represented as $b_k^q=a_k*\exp(j\frac{2\pi qk}{766})$, and the following orthogonal ZC sequence matrix may be obtained:

$$\begin{bmatrix}b_k^1\\b_k^2\\b_k^3\\\vdots\\b_k^{766}\end{bmatrix}=\begin{bmatrix}b_0^1 & b_1^1 & \dots b_{N_{LS}}^1 & b_{N_{LS+1}}^1 & \cdots & b_{N_{ZC+1}}^1\\b_0^2 & b_1^2 & \dots b_{N_{LS}}^2 & b_{N_{LS+1}}^2 & \cdots & b_{N_{ZC+1}}^2\\\ddots\\b_0^{766} & b_1^{766} & \dots b_{N_{LS}}^{766} & b_{N_{LS+1}}^{766} & \cdots & b_{N_{ZC+1}}^{766}\end{bmatrix}.$$

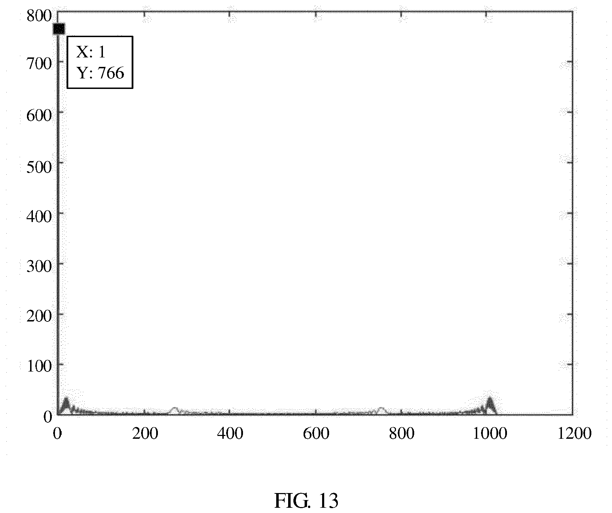

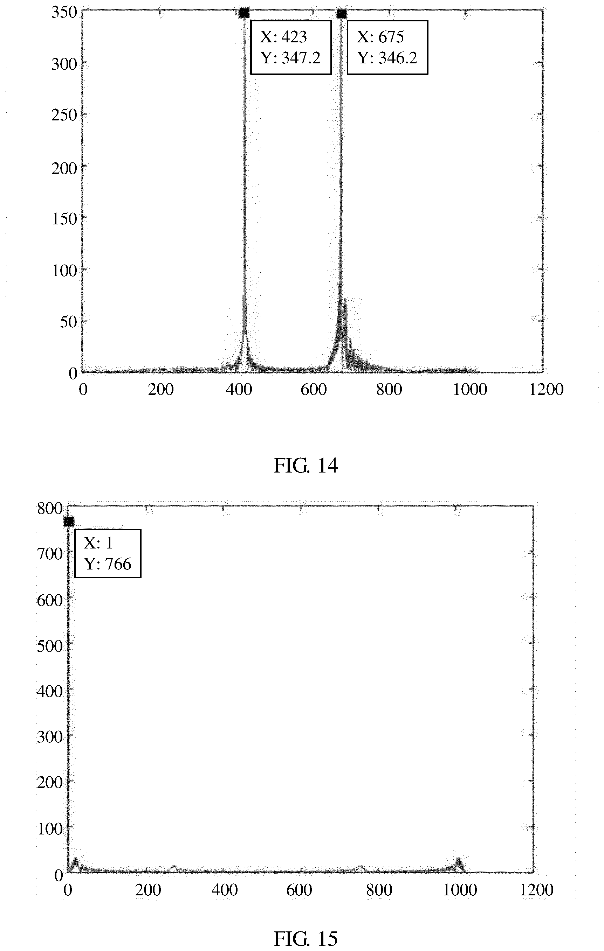

A guard band with a length of 127, a guard band with a length of 128, and three intermediate direct current subcarriers $N_{DC}$ are respectively added to two sides of a row sequence of the orthogonal ZC sequence matrix to form a frequency domain channel estimation training sequence. A pattern of each channel estimation training sequence is shown in FIG. 12. Table 5 shows a PAPR value of the frequency domain channel estimation training sequence determined according to a ZC sequence of q = 557 and a ZC sequence of q = 210 when u = 1. It may be learned that the channel estimation training sequence in this embodiment of this application has a relatively small PAPR. FIG. 13 and FIG. 14 respectively show an autocorrelation characteristic of the frequency domain channel estimation training sequence determined according to the ZC sequence of q = 557, and a cross-correlation characteristic between frequency domain channel estimation training sequences determined according to the ZC sequence of q = 557 and the ZC sequence of q

= 210. It may be learned that the channel estimation training sequence in this embodiment of this application has a good autocorrelation characteristic and cross-correlation characteristic.

**Table 5**

| $q$ | PAPR |
|-----|------|
| 557 | 2.6256 |
| 210 | 2.6256 |

Scenario 5:

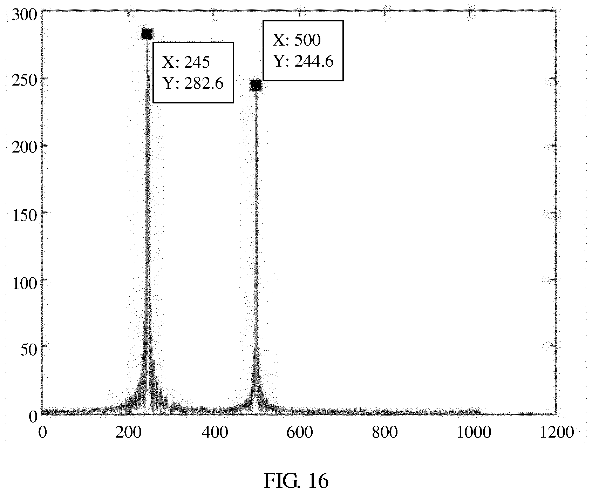

A quantity of bound channels in a communications system $N_{CB}$ = 1, a quantity of MIMO antennas $N_T$ = 4. It can be learned from Table 1 that a length of the channel estimation training sequence $N_{SD}$ = 512, and a length of the sequence $b_k^q$ $N_{ZC} = N_{LS} + N_{RS} = 766$. The transmit end device may select four ZC sequences from the orthogonal ZC sequence matrix generated in the scenario 4, generate four frequency domain channel estimation training sequences based on the four selected ZC sequences, and separately map the four channel estimation training sequences to subcarriers of different transmit antennas by using a pattern same as the pattern shown in FIG. 12. Table 6 shows a PAPR value of the frequency domain channel estimation training sequence determined according to a ZC sequence of $q$ = 557, a ZC sequence of $q$ = 210, a ZC sequence of $q$ = 313, and a ZC sequence of $q$ = 454 when $u$ = 1. It may be learned that the channel estimation training sequence in this embodiment of this application has a relatively small PAPR. FIG. 15 and FIG. 16 respectively show an autocorrelation characteristic of the frequency domain channel estimation training sequence determined according to the ZC sequence of $q$ = 313, and a cross-correlation characteristic between frequency domain channel estimation training sequences determined according to the ZC sequence of $q$ = 313 and the ZC sequence of $q$ = 557. It may be learned that the channel estimation training sequence in this embodiment of this application has a good autocorrelation characteristic and cross-correlation characteristic.

**Table 6**

| $q$ | PAPR |
|-----|------|
| 557 | 2.6256 |
| 210 | 2.6256 |
| 313 | 2.6277 |
| 454 | 2.6277 |

Scenario 6:

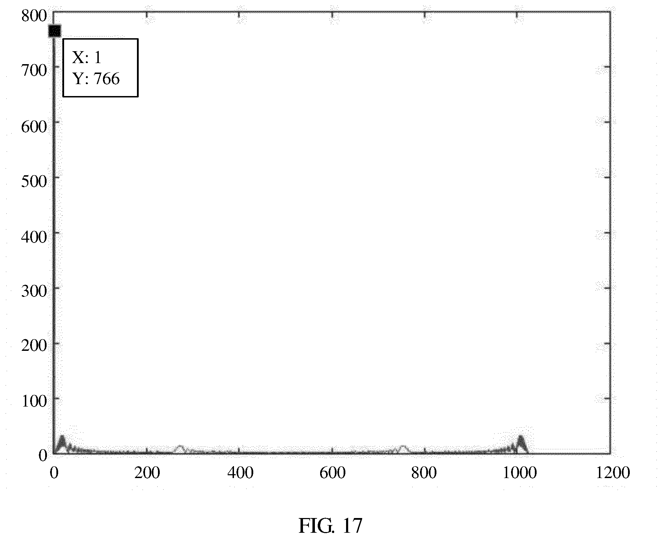

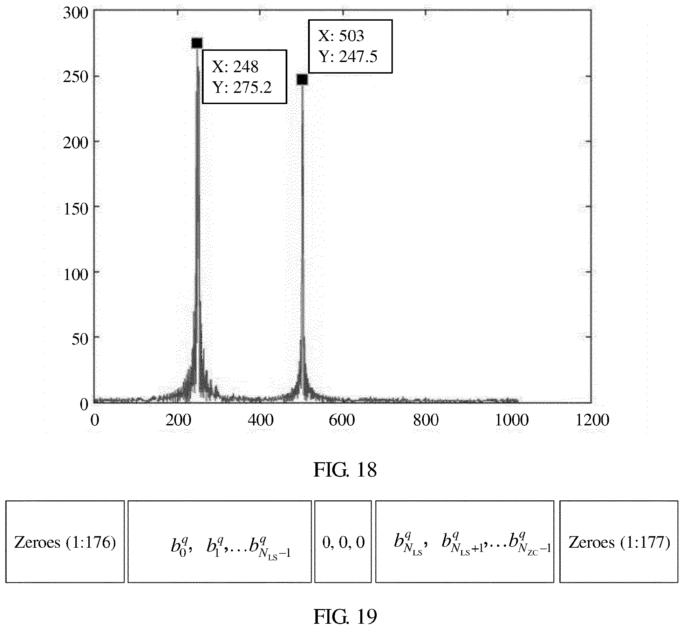

A quantity of bound channels in a communications system $N_{CB}$ = 1, a quantity of MIMO antennas $N_T$ = 8. It can be learned from Table 1 that a length of the channel estimation training sequence $N_{SD}$ = 512, and a length of the sequence $b_k^q$ $N_{ZC} = N_{LS} + N_{RS} = 766$. The transmit end device may select eight ZC sequences from the orthogonal ZC sequence matrix generated in the scenario 4, generate eight frequency domain channel estimation training sequences based on the eight selected ZC sequences, and separately map the eight channel estimation training sequences to subcarriers of different transmit antennas by using a pattern same as the pattern shown in FIG. 12. Table 7 shows a PAPR value of the frequency domain channel estimation training sequence determined according to a ZC sequence of $q$ = 557, a ZC sequence of $q$ = 210, a ZC sequence of $q$ = 313, a ZC sequence of $q$ = 454, a ZC sequence of $q$ = 560, a ZC sequence of $q$ = 207, a ZC sequence of $q$ = 316, and a ZC sequence of $q$ = 451 when $u$ = 1. It may be learned that the channel estimation training sequence in this embodiment of this application has a relatively small PAPR. FIG. 17 and FIG. 18 respectively show an autocorrelation characteristic of the frequency domain channel estimation training sequence determined according to the ZC sequence of $q$ = 560, and a cross-correlation characteristic between frequency domain channel estimation training sequences determined according to the ZC sequence of $q$ = 313 and the ZC sequence of $q$ = 560. It may be learned that the channel estimation training sequence in this embodiment of this application has a good autocorrelation characteristic and cross-correlation characteristic.

**Table 7**

| q | PAPR |
|---|---|
| 557 | 2.6256 |
| 210 | 2.6256 |
| 313 | 2.6277 |
| 454 | 2.6277 |
| 560 | 2.6309 |
| 207 | 2.6309 |
| 316 | 2.6350 |
| 451 | 2.6350 |

Scenario 7:

A quantity of bound channels in a communications system $N_{CB}$ = 3, a quantity of MIMO antennas $N_T$ = 2. It can be learned from Table 1 that a length of the channel estimation training sequence $N_{SD}$ = 1536, a length of the sequence $b_k^q$ $N_{ZC}=N_{LS}+N_{RS}$=1180, and the channel estimation training sequence meets a relationship shown in Formula (6):

$$M\ (n)\ =\begin{cases} 0, & 1\leq n \leq 176 \\ 0, & 1360\leq n \leq 1536 \\ 0, & n= N_{DC0}\ ,\ N_{DC1}\ ,\ N_{DC2} \\ b_k^q, & \text{others} \end{cases} \qquad (6)$$

Because Nzc is an even number, a ZC root sequence $a_k$ is:

$$a_k = \begin{bmatrix} 1 & e^{j\frac{\pi}{1180}} & e^{j\frac{4\pi}{1180}} & e^{j\frac{9\pi}{1180}} \cdots \cdots & e^{j\frac{1179^2\pi}{1180}} \end{bmatrix}_{1\times 1180} .$$

According to the foregoing method for generating the orthogonal ZC sequence matrix, the transmit end device performs linear phase-shift processing on the ZC root sequence $a_k$, a phase-shift factor of the phase shift is $\exp(j\frac{2\pi qk}{1180})$, and therefore the sequence $b_k^q$ may be represented as $b_k^q = a_k * \exp(j\frac{2\pi qk}{1180})$, and the following orthogonal ZC sequence matrix may be obtained:

$$\begin{bmatrix} b_k^1 \\ b_k^1 \\ b_k^3 \\ \vdots \\ b_k^{1180} \end{bmatrix} = \begin{bmatrix} b_0^1 & b_1^1 & \ldots b_{N_{LS}}^1 & b_{N_{LS+1}}^1 & \cdots & b_{N_{ZC+1}}^1 \\ b_0^2 & b_1^2 & \ldots b_{N_{LS}}^2 & b_{N_{LS+1}}^2 & \cdots & b_{N_{ZC+1}}^2 \\ \ddots \\ b_0^{1180} & b_1^{1180} & \ldots b_{N_{LS}}^{1180} & b_{N_{LS+1}}^{1180} & \cdots & b_{N_{ZC+1}}^{1180} \end{bmatrix} .$$

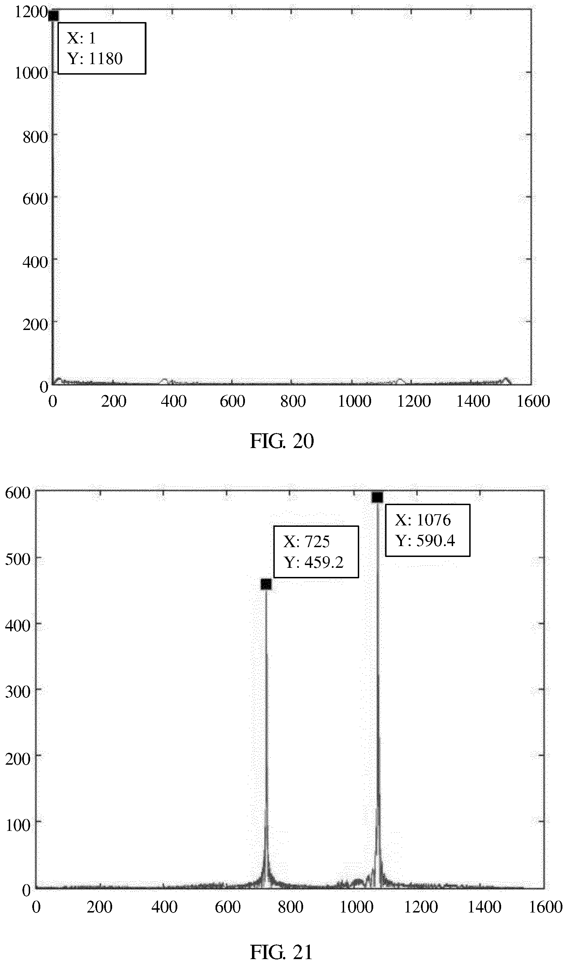

A guard band with a length of 176, a guard band with a length of 177, and three intermediate direct current subcarriers $N_{DC}$ are respectively added to two sides of a row sequence of the orthogonal ZC sequence matrix to form a frequency domain channel estimation training sequence. A pattern of each channel estimation training sequence is shown in FIG. 19. Table 8 shows a PAPR value of the frequency domain channel estimation training sequence determined according to a ZC sequence of $q$ = 230 and a ZC sequence of $q$ = 951 when $u$ = 1. It may be learned that the channel estimation training sequence in this embodiment of this application has a relatively small PAPR. FIG. 20 and FIG. 21 respectively show an autocorrelation characteristic of the frequency domain channel estimation training sequence determined according to the ZC sequence of $q$ = 230, and a cross-correlation characteristic between frequency domain channel estimation training sequences determined according to the ZC sequence of $q$ = 230 and the ZC sequence of $q$ = 951. It may be learned that the channel estimation training sequence in this embodiment of this application has a good autocorrelation characteristic and cross-correlation characteristic.

**Table 8**

| $q$ | PAPR |
|-----|------|
| 230 | 2.5719 |
| 951 | 2.5719 |

Scenario 8:

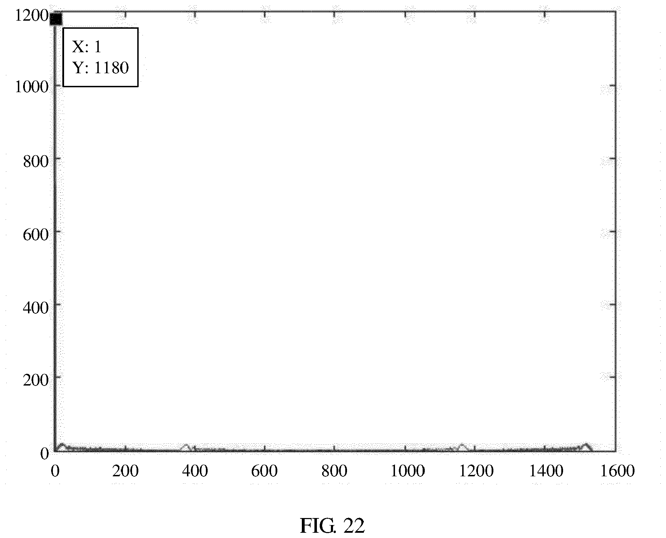

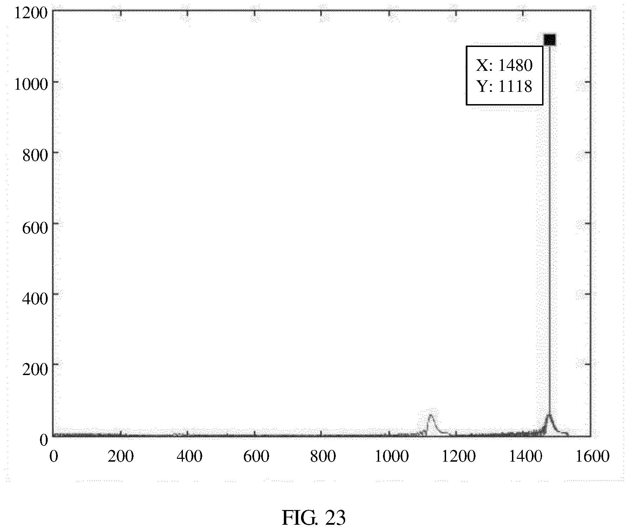

A quantity of bound channels in a communications system $N_{CB}$ = 3, a quantity of MIMO antennas $N_T$ = 4. It can be learned from Table 1 that a length of the channel estimation training sequence $N_{SD}$ = 1536, and a length of the sequence $b_k^q$ $N_{ZC} = N_{LS} + N_{RS} = 1180$. The transmit end device may select four ZC sequences from the orthogonal ZC sequence matrix generated in the scenario 7, generate four frequency domain channel estimation training sequences based on the four selected ZC sequences, and separately map the four channel estimation training sequences to subcarriers of different transmit antennas by using a pattern same as the pattern shown in FIG. 19. Table 9 shows a PAPR value of the frequency domain channel estimation training sequence determined according to a ZC sequence of $q$ = 230, a ZC sequence of $q$ = 951, a ZC sequence of $q$ = 173, and a ZC sequence of $q$ = 1008 when $u$ = 1. It may be learned that the channel estimation training sequence in this embodiment of this application has a relatively small PAPR. FIG. 22 and FIG. 23 respectively show an autocorrelation characteristic of the frequency domain channel estimation training sequence determined according to the ZC sequence of $q$ = 173, and a cross-correlation characteristic between frequency domain channel estimation training sequences determined according to the ZC sequence of $q$ = 173 and the ZC sequence of $q$ = 230. It may be learned that the channel estimation training sequence in this embodiment of this application has a good autocorrelation characteristic and cross-correlation characteristic.

**Table 9**

| $q$ | PAPR |
|-----|------|
| 230 | 2.5719 |
| 951 | 2.5719 |
| 173 | 2.5721 |
| 1008 | 2.5721 |

Scenario 9:

A quantity of bound channels in a communications system $N_{CB}$ = 3, a quantity of MIMO antennas $N_T$ = 8. It can be learned from Table 1 that a length of the channel estimation training sequence $N_{SD}$ = 1536, and a length of the sequence $b_k^q$ $N_{ZC} = N_{LS} + N_{RS} = 1180$. The transmit end device may select eight ZC sequences from the orthogonal ZC sequence matrix generated in scenario 7, generate eight frequency domain channel estimation training sequences based on the eight selected ZC sequences, and separately map the eight channel estimation training sequences to subcarriers of different transmit antennas by using a pattern same as the pattern shown in FIG. 19. Table 10 shows a PAPR value of the frequency domain channel estimation training sequence determined according to a ZC sequence of $q$ = 230, a ZC sequence of $q$ = 951, a ZC sequence of $q$ = 173, a ZC sequence of $q$ = 1008, a ZC sequence of $q$ = 549, a ZC sequence of $q$ = 632, a ZC sequence of $q$ = 1138, and a ZC sequence of $q$ = 43 when $u$ = 1. It may be learned that the channel estimation training sequence in this embodiment of this application has a relatively small PAPR. FIG.

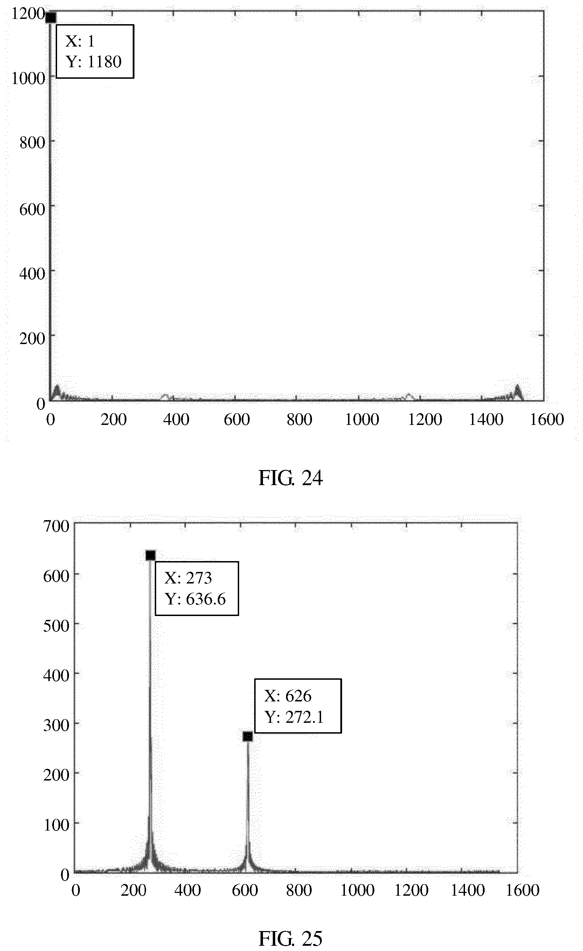

24 and FIG. 25 respectively show an autocorrelation characteristic of the frequency domain channel estimation training sequence determined according to the ZC sequence of $q = 1138$, and a cross-correlation characteristic between frequency domain channel estimation training sequences determined according to the ZC sequence of $q = 230$ and the ZC sequence of $q = 1138$. It may be learned that the channel estimation training sequence in this embodiment of this application has a good autocorrelation characteristic and cross-correlation characteristic.

**Table 10**

| $q$ | PAPR |
|------|--------|
| 230 | 2.5719 |
| 951 | 2.5719 |
| 173 | 2.5721 |
| 1008 | 2.5721 |
| 549 | 2.5727 |
| 632 | 2.5727 |
| 1138 | 2.5729 |
| 43 | 2.5729 |

Scenario 10:

A quantity of bound channels in a communications system $N_{CB} = 4$, a quantity of MIMO antennas $N_T = 2$. It can be learned from Table 1 that a length of the channel estimation training sequence $N_{SD} = 2048$, a length of the sequence $b_k^q$ $N_{ZC}=N_{LS}+N_{RS}=1596$, and the channel estimation training sequence meets a relationship shown in Formula (7):

$$\mathbf{M}(n) = \begin{cases} 0, & 1 \leq n \leq 224 \\ 0, & 1824 \leq n \leq 2048 \\ 0, & n = N_{DC0}, N_{DC1}, N_{DC2} \\ b_k^q, & \text{others} \end{cases} \qquad (7)$$

Because $N_{ZC}$ is an even number, a ZC root sequence $a_k$ is:

$$a_k = \begin{bmatrix} 1 & e^{j\frac{\pi}{1596}} & e^{j\frac{4\pi}{1596}} & e^{j\frac{9\pi}{1596}} \cdots \cdots & e^{j\frac{1595^2\pi}{1596}} \end{bmatrix}_{1\times1596}.$$

According to the foregoing method for generating the orthogonal ZC sequence matrix, the transmit end device performs linear phase-shift processing on the ZC root sequence $a_k$, a phase-shift factor of the phase shift is $\exp(j\frac{2\pi qk}{1596})$, and therefore the sequence $b_k^q$ may be represented as $b_k^q = a_k * \exp(j\frac{2\pi qk}{1596})$, and the following orthogonal ZC sequence matrix may be obtained:

$$\begin{bmatrix} b_k^1 \\ b_k^2 \\ b_k^3 \\ \vdots \\ b_k^{1596} \end{bmatrix} = \begin{bmatrix} b_0^1 & b_1^1 & \dots b_{N_{LS}}^1 & b_{N_{LS+1}}^1 & \cdots & b_{N_{ZC+1}}^1 \\ b_0^2 & b_1^2 & \dots b_{N_{LS}}^2 & b_{N_{LS+1}}^2 & \cdots & b_{N_{ZC+1}}^2 \\ \ddots & & & & & \\ b_0^{1596} & b_1^{1596} & \dots b_{N_{LS}}^{1596} & b_{N_{LS+1}}^{1596} & \cdots & b_{N_{ZC+1}}^{1596} \end{bmatrix}.$$

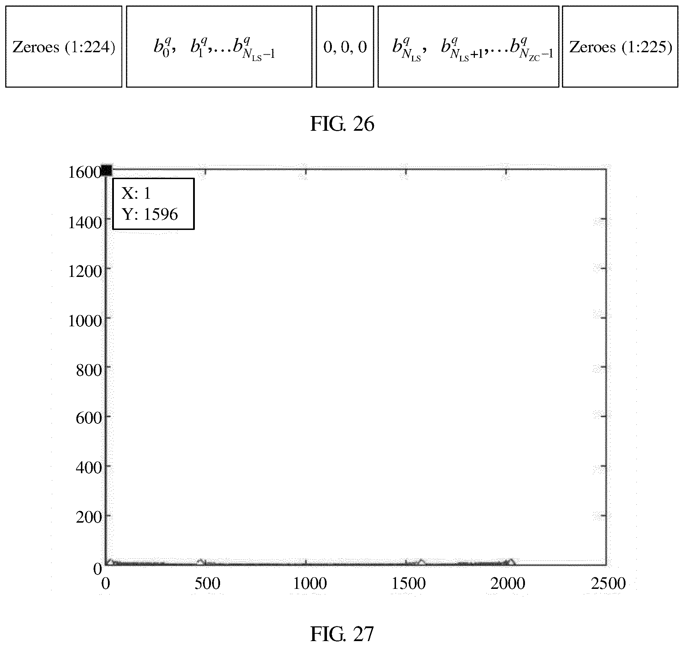

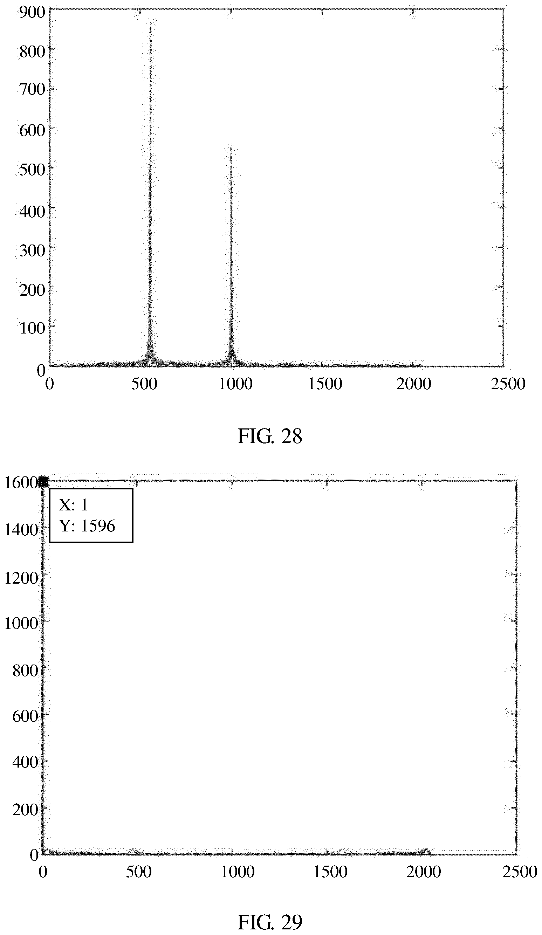

A guard band with a length of 224, a guard band with a length of 225, and three intermediate direct current subcarriers $N_{DC}$ are respectively added to two sides of a row sequence of the orthogonal ZC sequence matrix to form a frequency domain channel estimation training sequence. A pattern of each channel estimation training sequence is shown in FIG. 26. Table 11 shows a PAPR value of the frequency domain channel estimation training sequence determined according to a ZC sequence of $q = 1321$ and a ZC sequence of $q = 276$ when $u = 1$. It may be learned that the channel estimation training sequence in this embodiment of this application has a relatively small PAPR. FIG. 27 and FIG. 28 respectively show an autocorrelation characteristic of the frequency domain channel estimation training sequence determined according to the ZC sequence of $q = 1321$, and a cross-correlation characteristic between frequency domain channel estimation training sequences determined according to the ZC sequence of $q = 1321$ and the ZC sequence of $q = 276$. It may be learned that the channel estimation training sequence in this embodiment of this application has a good autocorrelation characteristic and cross-correlation characteristic.

**Table 11**

| $q$ | PAPR |
| --- | --- |
| 1321 | 2.5634 |
| 276 | 2.5634 |

Scenario 11:

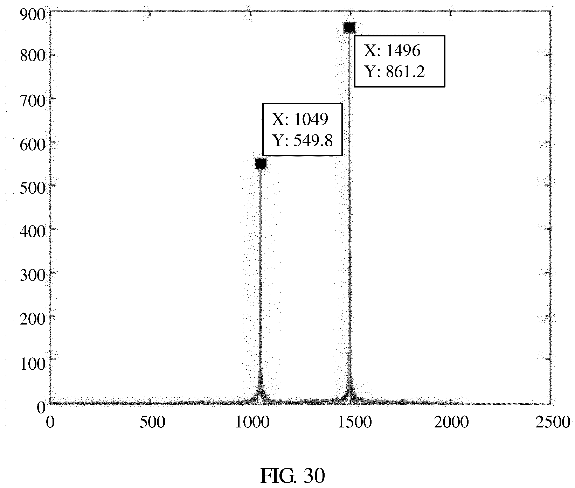

A quantity of bound channels in a communications system $N_{CB} = 4$, a quantity of MIMO antennas $N_T = 4$. It can be learned from Table 1 that a length of the channel estimation training sequence $N_{SD} = 2048$, and a length of the sequence $b_k^q$ $N_{ZC} = N_{LS} + N_{RS} = 1596$. The transmit end device may select four ZC sequences from the orthogonal ZC sequence matrix generated in scenario 10, generate four frequency domain channel estimation training sequences based on the four selected ZC sequences, and separately map the four channel estimation training sequences to subcarriers of different transmit antennas by using a pattern same as the pattern shown in FIG. 26. Table 12 shows a PAPR value of the frequency domain channel estimation training sequence determined according to a ZC sequence of $q = 1321$, a ZC sequence of $q = 210$, a ZC sequence of $q = 770$, and a ZC sequence of $q = 827$ when $u = 1$. It may be learned that the channel estimation training sequence in this embodiment of this application has a relatively small PAPR. FIG. 29 and FIG. 30 respectively show an autocorrelation characteristic of the frequency domain channel estimation training sequence determined according to the ZC sequence of $q = 770$, and a cross-correlation characteristic between frequency domain channel estimation training sequences determined according to the ZC sequence of $q = 1321$ and the ZC sequence of $q = 770$. It may be learned that the channel estimation training sequence in this embodiment of this application has a good autocorrelation characteristic and cross-correlation characteristic.

**Table 12**

| $q$ | PAPR |
| --- | --- |
| 1321 | 2.5634 |
| 276 | 2.5634 |
| 770 | 2.5638 |
| 827 | 2.5638 |

Scenario 12:

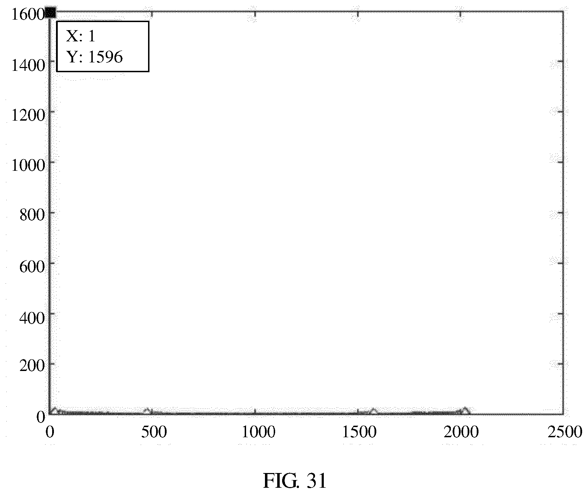

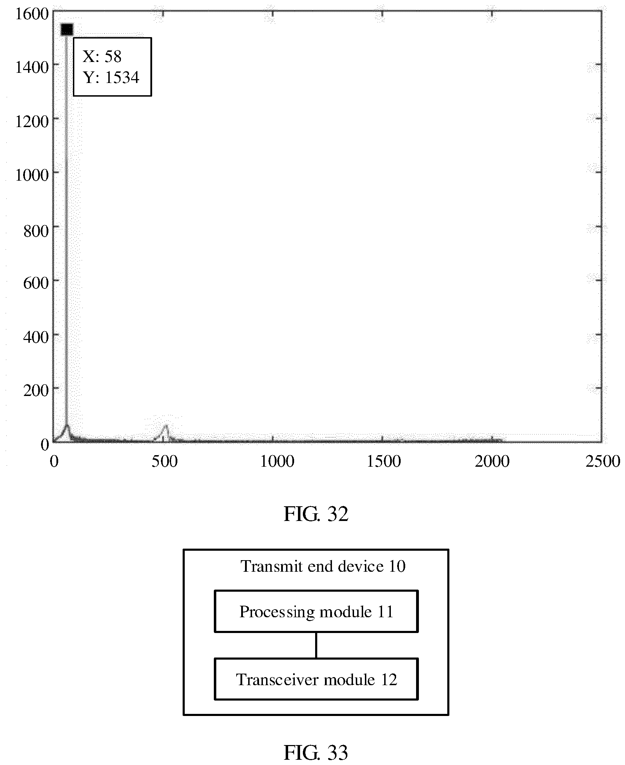

A quantity of bound channels in a communications system $N_{CB}$ = 4, a quantity of MIMO antennas $N_T$ = 4. It can be learned from Table 1 that a length of the channel estimation training sequence $N_{SD}$ = 2048, and a length of the sequence $b_k^q$ $N_{ZC} = N_{LS} + N_{RS} = 1596$. The transmit end device may select eight ZC sequences from the orthogonal ZC sequence matrix generated in scenario 10, generate eight frequency domain channel estimation training sequences based on the eight selected ZC sequences, and separately map the eight channel estimation training sequences to subcarriers of different transmit antennas by using a pattern same as the pattern shown in FIG. 26. Table 13 shows a PAPR value of the frequency domain channel estimation training sequence determined according to a ZC sequence of $q$ = 1321, a ZC sequence of $q$ = 276, a ZC sequence of $q$ = 770, a ZC sequence of $q$ = 827, a ZC sequence of $q$ = 1378, a ZC sequence of $q$ = 219, a ZC sequence of $q$ = 1264, and a ZC sequence of $q$ = 333 when $u$ = 1. It may be learned that the channel estimation training sequence in this embodiment of this application has a relatively small PAPR. FIG. 31 and FIG. 32 respectively show an autocorrelation characteristic of the frequency domain channel estimation training sequence determined according to the ZC sequence of $q$ = 1378, and a cross-correlation characteristic between frequency domain channel estimation training sequences determined according to the ZC sequence of $q$ = 1378 and the ZC sequence of $q$ = 1321. It may be learned that the channel estimation training sequence in this embodiment of this application has a good autocorrelation characteristic and cross-correlation characteristic.

**Table 13**

| $q$ | PAPR |
|------|--------|
| 1321 | 2.5634 |
| 276 | 2.5634 |
| 770 | 2.5638 |
| 827 | 2.5638 |
| 1378 | 2.5643 |
| 219 | 2.5643 |
| 1264 | 2.5652 |
| 333 | 2.5652 |

By describing the foregoing scenario, it may be learned that the frequency domain channel estimation training sequence in this embodiment of this application can obtain a relatively low PAPR (about 2.7 dB). This can reduce impact of a power amplifier (power amplifier, PA) on a communications system, and improve channel estimation accuracy.

It should be noted that when the ZC sequence is selected from the orthogonal ZC sequence matrix, the transmit end device may randomly select ZC sequences, a quantity of which meets a requirement of a quantity of transmit antennas, or a transmit end device provider may set a selection rule. This is not limited in this embodiment of this application.

It should be further noted that all the orthogonal ZC sequence matrices described in the foregoing embodiment are square matrices of $N_{ZC} \times N_{ZC}$. However, a person skilled in the art may understand that, the method in this embodiment of this application may be applied to a MIMO scenario provided that a quantity of rows of the orthogonal ZC matrix generated by the transmit end device is greater than or equal to a quantity of transmit antennas.

The channel estimation method according to the embodiments of this application is described above in detail with reference to FIG. 1 to FIG. 32. A transmit end device according to an embodiment of this application is described below in detail with reference to FIG. 33. The transmit end device in this embodiment has any function of the transmit end device in the foregoing method.

As shown in FIG. 33, the transmit end device 10 includes:

a processing module 11, configured to determine a channel estimation training sequence, where the channel estimation training sequence includes a first subsequence and a second subsequence, the first subsequence includes some elements in a target ZC sequence, and the second subsequence includes elements other than the some elements in the target ZC sequence; and
a transceiver module 12, configured to send the channel estimation training sequence, where a subcarrier carrying the first subsequence and a subcarrier carrying the second subsequence are respectively located on two sides of a direct current subcarrier.

Therefore, the device in this embodiment of this application determines the channel estimation training sequence based on the ZC sequence, and classifies the target ZC sequence into the first subsequence and the second subsequence that are mapped to subcarriers on two sides of the direct current subcarrier, so that the channel estimation training sequence has a relatively low peak-to-average ratio, thereby improving channel estimation accuracy.

In this embodiment of this application, optionally, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the direct current subcarrier, a subcarrier carrying the fourth subsequence is a guard band subcarrier on a right side of the direct current subcarrier, and a subcarrier carrying the fifth subsequence is the direct current subcarrier.

In this embodiment of this application, optionally, the processing module 11 is further configured to: determine a channel estimation training sequence matrix, where the channel estimation training sequence matrix includes M ZC sequences each with a length of $N_{ZC}$, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j; and determine that a row of the channel estimation training sequence matrix is the target ZC sequence.

In this embodiment of this application, optionally, the processing module 11 is specifically configured to determine the channel estimation training sequence matrix based on a quantity of bound channels.

In this embodiment of this application, optionally, the processing module 11 is specifically configured to: determine a ZC root sequence based on the quantity of bound channels; and perform phase-shift processing on the ZC root sequence to obtain the channel estimation training sequence matrix, where a phase-shift factor of the phase-shift processing is $e^{j\frac{2\pi lk}{N_{ZC}}}$, where $l$ = 1, ..., M, and $k$ = 0, ..., $N_{ZC}$-1.

In this embodiment of this application, optionally, a length of the first subsequence is $N_{LS}$, a length of the second subsequence is $N_{RS}$, and $N_{LS}$ and $N_{RS}$ are positive integers, where a first element to an $N_{LSth}$ element in the target ZC sequence are successively a first element to an $N_{LSth}$ element in the first subsequence, and an $(N_{LS}+1)_{th}$ element to an $N_{ZCth}$ element in the target ZC sequence are successively a first element to an $N_{RSth}$ element in the second subsequence.

In this embodiment of this application, optionally, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LSth}$ subcarrier in the $N_{LS}$ subcarriers is adjacent to the direct current subcarrier, where s=1, ..., $N_{LS}$, and a first subcarrier in the $N_{RS}$ subcarriers is adjacent to the direct current subcarrier, where t=1, ..., $N_{RS}$.

For the transmit end device in this embodiment of this application, refer to the transmit end device in the method 100 according to the embodiments of this application. In addition, units/modules in the device and the foregoing other operations and/or functions are respectively intended to implement corresponding procedures of the method 100. For brevity, details are not described herein.

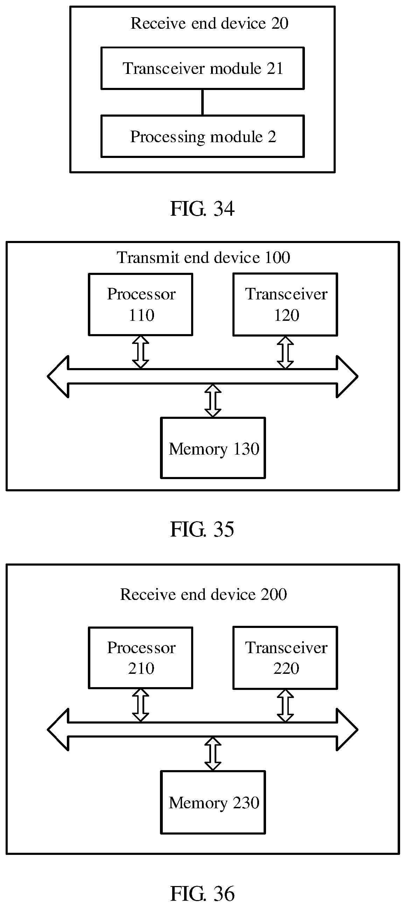

FIG. 34 shows a receive end device according to another embodiment of this application. In this embodiment, the receive end device has any function of the receive end device in the foregoing method. As shown in FIG. 34, the receive end device 20 includes:

a transceiver module 21, configured to receive a channel estimation training sequence, where the channel estimation training sequence includes a first subsequence and a second subsequence, the first subsequence includes some elements in a target ZC sequence, the second subsequence includes elements other than the some elements in the target ZC sequence, and a subcarrier carrying the first subsequence and a subcarrier carrying the second subsequence are respectively located on two sides of a direct current subcarrier; and

a processing module 22, configured to perform channel estimation based on the channel estimation training sequence.

Therefore, in this embodiment of this application, the channel estimation training sequence received by the receive end device is determined based on the ZC sequence. Subcarriers carrying the first subsequence and the second subsequence in the channel estimation training sequence are respectively located on two sides of the direct current subcarrier, and the first subsequence and the second subsequence are respectively corresponding to different elements in the target ZC sequence, so that the channel estimation training sequence has a relatively low peak-to-average ratio, thereby improving channel estimation accuracy.

In this embodiment of this application, optionally, the channel estimation training sequence further includes a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the direct current subcarrier, a subcarrier carrying the fourth subsequence is a guard band subcarrier on a right side of the direct current subcarrier, and a subcarrier carrying the fifth subsequence is the direct current subcarrier.

In this embodiment of this application, optionally, the target ZC sequence is one of M ZC sequences each with a length of $N_{ZC}$ included in the channel estimation training sequence matrix, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, where M is a positive integer that is greater than or equal to a quantity of transmit antennas and that is less than or equal to $N_{ZC}$, i = 1, ..., M, j = 1, ..., M, and i ≠ j.

In this embodiment of this application, optionally, the channel estimation training sequence matrix is determined based on a quantity of bound channels.

In this embodiment of this application, optionally, the channel estimation training sequence matrix is obtained by performing phase-shift processing on the ZC root sequence determined based on the quantity of bound channels, where a phase-shift factor of the phase-shift processing is $e^{j\frac{2\pi lk}{N_{zc}}}$, where $l$ = 1, ..., M, and $k$ = 0, ..., $N_{ZC}$-1.

In this embodiment of this application, optionally, a length of the first subsequence is $N_{LS}$, a length of the second subsequence is $N_{RS}$, and $N_{LS}$ and $N_{RS}$ are positive integers, where a first element to an $N_{LSth}$ element in the target ZC sequence are successively a first element to an $N_{LSth}$ element in the first subsequence, and an $(N_{LS}+1)_{th}$ element to an $N_{ZCth}$ element in the target ZC sequence are successively a first element to an $N_{RSth}$ element in the second subsequence.

In this embodiment of this application, optionally, an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LSth}$ subcarrier in the $N_{LS}$ subcarriers is adjacent to the direct current subcarrier, where s=1, ..., $N_{LS}$, and a first subcarrier in the $N_{RS}$ subcarriers is adjacent to the direct current subcarrier, where t=1, ..., $N_{RS}$.

For the receive end device in this embodiment of this application, refer to the receive end device in the method 100 according to the embodiments of this application. In addition, units/modules in the device and the foregoing other operations and/or functions are respectively intended to implement corresponding procedures of the method 100. For brevity, details are not described herein.

FIG. 35 shows a transmit end device according to another embodiment of this application. In this embodiment, the transmit end device has any function of the transmit end device in the foregoing method. As shown in FIG. 35, the transmit end device 100 includes a processor 110 and a transceiver 120. The processor 110 is connected to the transceiver 120. Optionally, the transmit end device 100 further includes a memory 130, and the memory 130 is connected to the processor 110. The processor 110, the memory 130, and the transceiver 120 may communicate with each other by using an inner connection path. The processor 110 is configured to determine a channel estimation training sequence, where the channel estimation training sequence includes a first subsequence and a second subsequence, the first subsequence includes some elements in a target ZC sequence, and the second subsequence includes elements other than the some elements in the target ZC sequence. The transceiver 120 is configured to send the channel estimation training sequence, where a subcarrier carrying the first subsequence and a subcarrier carrying the second subsequence are respectively located on two sides of a direct current subcarrier.

Therefore, the transmit end device in this embodiment of this application classifies the target ZC sequence into the first subsequence and the second subsequence that are mapped to subcarriers on two sides of the direct current subcarrier, so that the channel estimation training sequence has a relatively low peak-to-average ratio, thereby improving channel estimation accuracy.

For the transmit end device 100 in this embodiment of this application, refer to the transmit end device 10 in the embodiments of this application. In addition, units/modules in the transmit end device 100 and the foregoing other operations and/or functions are respectively intended to implement corresponding procedures of the method 100. For brevity, details are not described herein.

FIG. 36 is a schematic block diagram of a receive end device according to an embodiment of this application. In this embodiment, the receive end device has any function of the receive end device in the foregoing method. As shown in FIG. 36, the receive end device 200 includes a processor 210 and a transceiver 220, and the processor 210 is connected to the transceiver 220. Optionally, the device 200 further includes a memory 230, and the memory 230 is connected to the processor 210. The processor 210, the memory 230, and the transceiver 220 may communicate with each other by using an inner connection path. The transceiver 220 is configured to receive a channel estimation training sequence, where the channel estimation training sequence includes a first subsequence and a second subsequence, the first subsequence includes some elements in a target ZC sequence, the second subsequence includes elements other than the some elements in the target ZC sequence, and a subcarrier carrying the first subsequence and a subcarrier carrying the second subsequence are respectively located on two sides of a direct current subcarrier. The processor 210 is configured to perform channel estimation based on the channel estimation training sequence.

Therefore, in this embodiment of this application, the channel estimation training sequence received by the receive end device is determined based on the ZC sequence. Subcarriers carrying the first subsequence and the second subsequence in the channel estimation training sequence are respectively located on two sides of the direct current subcarrier, and the first subsequence and the second subsequence are respectively corresponding to different elements in the target ZC sequence, so that the channel estimation training sequence has a relatively low peak-to-average ratio, thereby improving channel estimation accuracy.

For the receive end device 200 in this embodiment of this application, refer to the receive end device 20 in the embodiments of this application. In addition, units/modules in the receive end device 200 and the foregoing other operations and/or functions are respectively intended to implement corresponding procedures of the method 100. For brevity, details are not described herein.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logic device, or a discrete hardware component. The processor 903 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

An embodiment of this application further provides a computer program product including an instruction. When a computer runs the instruction of the computer program product, the computer performs the channel estimation method in the foregoing method embodiments. Specifically, the computer program product may run on the foregoing transmit end device and receive end device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer instructions are loaded and executed on a computer, the procedures or functions according to the embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any available medium accessible to a computer, or a data storage device, for example, a server or a data center, integrating one or more available media. The usable medium may be a magnetic medium (for example, a floppy disk, a hard disk, or a magnetic tapc), an optical medium (for example, a high-density digital video disc (digital video disc, DVD)), a semiconductor medium (for example, a solid state disk (solid state disk, SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1. A method, comprising:

   generating (S110) a channel estimation training sequence, wherein the channel estimation training sequence comprises a first subsequence and a second subsequence, the first subsequence comprises some elements in a target Zadoff-Chu, ZC, sequence, and the second subsequence comprises elements other than the some elements in the target ZC sequence; and
   sending (S120) the channel estimation training sequence, wherein a subcarrier carrying the first subsequence and a subcarrier carrying the second subsequence are respectively located on two sides of a direct current subcarrier;
   wherein before the generating (S110) the channel estimation training sequence, the method further comprises:

   determining a ZC root sequence based on the quantity of bound channels;
   performing phase-shift processing on the ZC root sequence to obtain a channel estimation training sequence matrix, wherein the channel estimation training sequence matrix comprises M ZC sequences each with a length of $N_{ZC}$, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, wherein M is a positive integer that is greater than or equal to a quantity of transmit antennas and that is less than or equal to $N_{ZC}$, i = 1, ..., M, j = 1, ..., M, and i ≠ j, wherein a phase-shift factor of the phase-shift processing is $e^{j\frac{2\pi lk}{N_{zc}}}$ , wherein $l$ = 1, ..., M, and $k$ = o, ..., $N_{ZC}$-1; and

determining that a row of the channel estimation training sequence matrix is the target ZC sequence.

2. The method according to claim 1, wherein the channel estimation training sequence further comprises a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

3. The method according to claim 1, wherein a length of the first subsequence is $N_{LS}$, a length of the second subsequence is $N_{RS}$, and $N_{LS}$ and $N_{RS}$ are positive integers, wherein
a first element to an $N_{LSth}$ element in the target ZC sequence are successively a first element to an $N_{LS\,th}$ element in the first subsequence, and an $(N_{LS} +1)_{th}$ element to an $N_{ZCth}$ element in the target ZC sequence are successively a first element to an $N_{RSth}$ element in the second subsequence.

4. The method according to claim 3, wherein an $s^{th}$ subcarrier in $N_{LS}$ subcarriers on a left side of the direct current subcarrier carries an $s^{th}$ element in the first subsequence, a $t^{th}$ subcarrier in $N_{RS}$ subcarriers on a right side of the direct current subcarrier carries a $t^{th}$ element in the second subsequence, an $N_{LS\,th}$ subcarrier in the $N_{LS}$ subcarriers is adjacent to the direct current subcarrier, wherein s = 1, ..., $N_{LS}$, and a first subcarrier in the $N_{RS}$ subcarriers is adjacent to the direct current subcarrier, wherein t = 1, ..., $N_{RS}$.

5. A transmit end device (10), comprising:

a processor (11), configured to determine a channel estimation training sequence, wherein the channel estimation training sequence comprises a first subsequence and a second subsequence, the first subsequence comprises some elements in a target Zadoff-Chu, ZC, sequence, and the second subsequence comprises elements other than the some elements in the target ZC sequence; and
a transceiver (12), configured to send the channel estimation training sequence, wherein a subcarrier carrying the first subsequence and a subcarrier carrying the second subsequence are respectively located on two sides of a direct current subcarrier;
wherein the processor is further configured to:

determine a ZC root sequence based on the quantity of bound channels;
perform phase-shift processing on the ZC root sequence to obtain a channel estimation training sequence matrix, wherein the channel estimation training sequence matrix comprises M ZC sequences each with a length of $N_{ZC}$, an $i^{th}$ ZC sequence in the M ZC sequences forms an $i^{th}$ row of the channel estimation training sequence matrix, the $i^{th}$ ZC sequence in the M ZC sequences is orthogonal to a $j^{th}$ ZC sequence, wherein M is a positive integer that is greater than or equal to a quantity of transmit antennas and that is less than or equal to $N_{ZC}$, i = 1, ..., M, j = 1, ..., M, and i ≠ j, wherein a phase-shift factor of the phase-shift processing is $e^{j\frac{2\pi lk}{N_{zc}}}$ , wherein $l$ = 1, ..., M, and $k$ = o, ..., $N_{ZC}$-1; and
determine that a row of the channel estimation training sequence matrix is the target ZC sequence.

6. The transmit end device according to claim 5, wherein the channel estimation training sequence further comprises a third subsequence, a fourth subsequence, and a fifth subsequence, elements in the third subsequence, the fourth subsequence, and the fifth subsequence are preset values, a subcarrier carrying the third subsequence is a guard band subcarrier on a left side of the subcarrier carrying the first subsequence, a subcarrier carrying the fourth subsequence is a guard band subcarrier on a right side of the subcarrier carrying the second subsequence, and a subcarrier carrying the fifth subsequence is the direct current subcarrier.

7. The transmit end device according to claim 5, wherein a length of the first subsequence is $N_{LS}$, a length of the second subsequence is $N_{RS}$, and $N_{LS}$ and $N_{RS}$ are positive integers, wherein

a first element to an $N_{LS\,th}$ element in the target ZC sequence are successively a first element to an $N_{LS\,th}$ element in the first subsequence, and an $(N_{LS}+1)_{th}$ element to an $N_{ZCth}$ element in the target ZC sequence are successively a first element to an $N_{RSth}$ element in the second subsequence.

8. The transmit end device according to claim 7, wherein an s$^{th}$ subcarrier in $N_{LS}$ subcarriers on a left side of the direct current subcarrier carries an s$^{th}$ element in the first subsequence, a t$^{th}$ subcarrier in $N_{RS}$ subcarriers on a right side of the direct current subcarrier carries a t$^{th}$ element in the second subsequence, an $N_{LS\,th}$ subcarrier in the $N_{LS}$ subcarriers is adjacent to the direct current subcarrier, wherein s = 1, ..., $N_{LS}$, and a first subcarrier in the $N_{RS}$ subcarriers is adjacent to the direct current subcarrier, wherein t = 1, ..., $N_{RS}$.

9. A communications system comprising a transmit end device (10) according to any one of claims 5 to 8 and a receive end device (20);
the receive end device comprising:

   a transceiver (21), configured to receive a channel estimation training sequence from the transmit end device, wherein the channel estimation training sequence comprises a first subsequence and a second subsequence, the first subsequence comprises some elements in a target ZC sequence, the second subsequence comprises elements other than the some elements in the target ZC sequence, and a subcarrier carrying the first subsequence and a subcarrier carrying the second subsequence are respectively located on two sides of a direct current subcarrier; and
   a processor (22), configured to perform channel estimation based on the channel estimation training sequence.

10. A computer readable medium, comprising an instruction, wherein when the instruction is run on a computer, the computer performs the method according to any one of claims 1 to 4.

**Patentansprüche**

1. Verfahren, umfassend:

   Erzeugen (S110) einer Kanalschätzungs-Trainingssequenz, wobei die Kanalschätzungs-Trainingssequenz eine erste Untersequenz und eine zweite Untersequenz umfasst, die erste Untersequenz einige Elemente in einer Zadoff-Chu (ZC)-Zielsequenz umfasst und die zweite Untersequenz andere Elemente als die einigen Elemente in der ZC-Zielsequenz umfasst; und
   Senden (S120) der Kanalschätzungs-Trainingssequenz, wobei ein Unterträger, der die erste Untersequenz trägt, und ein Unterträger, der die zweite Untersequenz trägt, sich jeweils an zwei Seiten eines Gleichstrom-Unterträgers befinden;
   wobei das Verfahren vor dem Erzeugen (S110) der Kanalschätzungs-Trainingssequenz ferner umfasst:

   Bestimmen einer ZC-Wurzelsequenz basierend auf der Menge von begrenzten Kanälen;
   Durchführen einer Phasenverschiebungsverarbeitung an der ZC-Wurzelsequenz, um eine Kanalschätzungs-Trainingssequenzmatrix zu erhalten, wobei die Kanalschätzungs-Trainingssequenzmatrix jeweils M ZC-Sequenzen mit einer Länge von $N_{zc}$ umfasst, eine i-te ZC-Sequenz in den M ZC-Sequenzen eine i-te Reihe der Kanalschätzungs-Trainingssequenzmatrix bildet, die i-te ZC-Sequenz in den M ZC-Sequenzen orthogonal zu einer j-ten ZC-Sequenz ist, wobei M eine positive ganze Zahl größer oder gleich einer Menge von Sendeantennen ist und die kleiner oder gleich $N_{zc}$, i = 1,..., M, j = 1,..., M ist, und i ≠ j, wobei ein Phasenverschiebungsfaktor der Phasenverschiebungsverarbeitung $e^{j\frac{2\pi\,lk}{N_{ZC}}}$ ist, wobei $l$ = 1, ..., M, und k = o, ..., $N_{zc}$-1; und
   Bestimmen, dass eine Zeile der Kanalschätzungs-Trainingssequenzmatrix die ZC-Zielsequenz ist.

2. Verfahren nach Anspruch 1, wobei die Kanalschätzungs-Trainingssequenz ferner eine dritte Untersequenz, eine vierte Untersequenz und eine fünfte Untersequenz umfasst, Elemente in der dritten Untersequenz, der vierten Untersequenz und der fünften Untersequenz voreingestellte Werte sind, ein Unterträger, der die dritte Untersequenz trägt, ein Schutzband-Unterträger auf einer linken Seite des Unterträgers ist, der die erste Untersequenz trägt, ein Unterträger, der die vierte Untersequenz trägt, ein Schutzband-Unterträger auf einer rechten Seite des Unterträgers ist, der die zweite Untersequenz trägt, und ein Unterträger, der die fünfte Untersequenz trägt, der Gleichstrom-Unterträger ist.

3. Verfahren nach Anspruch 1, wobei eine Länge der ersten Untersequenz $N_{LS}$ ist, eine Länge der zweiten Untersequenz $N_{RS}$ ist und $N_{LS}$ und $N_{RS}$ positive ganze Zahlen sind, wobei ein erstes Element für ein $N_{LS}$-tes Element in der ZC-Zielsequenz aufeinanderfolgend ein erstes Element für ein $N_{LS}$-tes Element in der ersten Untersequenz ist, und ein ($N_{LS}$ +1)-tes Element für ein $N_{ZC}$ -tes Element in der ZC-Zielsequenz aufeinanderfolgend ein erstes Element für ein $N_{RS}$ -tes Element in der zweiten Untersequenz ist.

4. Verfahren nach Anspruch 3, wobei ein s-ter Unterträger von $N_{LS}$ Unterträgern auf einer linken Seite des Gleichstrom-Unterträgers ein s-tes Element in der ersten Untersequenz trägt, ein t-ter Unterträger in den $N_{RS}$ Unterträgern auf einer rechten Seite des Gleichstrom-Unterträgers ein t-tes Element in der zweiten Untersequenz trägt, ein $N_{LS}$-ter Unterträger in den $N_{LS}$ Unterträgern zu dem Gleichstrom-Unterträger benachbart ist, wobei s = 1,..., $N_{LS}$ und ein erster Unterträger in den $N_{RS}$ Unterträgern zu dem Gleichstrom-Unterträger benachbart ist, wobei t = 1, ..., $N_{RS}$.

5. Übertragungsendgerät (10), umfassend:

einen Prozessor (11), der konfiguriert ist, um eine Kanalschätzungs-Trainingssequenz zu bestimmen, wobei die Kanalschätzungs-Trainingssequenz eine erste Untersequenz und eine zweite Untersequenz umfasst, die erste Untersequenz einige Elemente in einer Zadoff-Chu (ZC)-Zielsequenz umfasst und die zweite Untersequenz andere Elemente als die einigen Elemente in der ZC-Zielsequenz umfasst; und
einen Sender-Empfänger (12), der konfiguriert ist, um die Kanalschätzungs-Trainingssequenz zu senden, wobei ein Unterträger, der die erste Untersequenz trägt, und ein Unterträger, der die zweite Untersequenz trägt, sich jeweils an zwei Seiten eines Gleichstrom-Unterträgers befinden;
wobei der Prozessor ferner konfiguriert ist, um:

eine ZC-Wurzelsequenz basierend auf der Menge von begrenzten Kanälen zu bestimmen;
eine Phasenverschiebungsverarbeitung an der ZC-Wurzelsequenz durchzuführen, um eine Kanalschätzungs-Trainingssequenzmatrix zu erhalten, wobei die Kanalschätzungs-Trainingssequenzmatrix jeweils M ZC-Sequenzen mit einer Länge von $N_{zc}$ umfasst, eine i-te ZC-Sequenz in den M ZC-Sequenzen eine i-te Reihe der Kanalschätzungs-Trainingssequenzmatrix bildet, die i-te ZC-Sequenz in den M ZC-Sequenzen orthogonal zu einer j-ten ZC-Sequenz ist, wobei M eine positive ganze Zahl größer oder gleich einer Menge von Sendeantennen ist und die kleiner oder gleich $N_{zc}$, i = 1,..., M, j = 1,..., M ist, und i ≠ j, wobei ein Phasenverschiebungsfaktor der Phasenverschiebungsverarbeitung $e^{j\frac{2\pi lk}{N_{ZC}}}$ ist, wobei $l$ = 1, ..., M und $k$ = o, ..., $N_{zc}$-1; und
zu bestimmen, dass eine Zeile der Kanalschätzungs-Trainingssequenzmatrix die ZC-Zielsequenz ist.

6. Übertragungsendgerät nach Anspruch 5, wobei die Kanalschätzungs-Trainingssequenz ferner eine dritte Untersequenz, eine vierte Untersequenz und eine fünfte Untersequenz umfasst, Elemente in der dritten Untersequenz, der vierten Untersequenz und der fünften Untersequenz voreingestellte Werte sind, ein Unterträger, der die dritte Untersequenz trägt, ein Schutzband-Unterträger auf einer linken Seite des Unterträgers ist, der die erste Untersequenz trägt, ein Unterträger, der die vierte Untersequenz trägt, ein Schutzband-Unterträger auf einer rechten Seite des Unterträgers ist, der die zweite Untersequenz trägt, und ein Unterträger, der die fünfte Untersequenz trägt, der Gleichstrom-Unterträger ist.

7. Übertragungsendgerät nach Anspruch 5, wobei eine Länge der ersten Untersequenz $N_{LS}$ ist, eine Länge der zweiten Untersequenz $N_{RS}$ ist und $N_{LS}$ und $N_{RS}$ positive ganze Zahlen sind, wobei ein erstes Element für ein $N_{LS}$-tes Element in der ZC-Zielsequenz aufeinanderfolgend ein erstes Element für ein $N_{LS}$-tes Element in der ersten Untersequenz ist, und ein ($N_{LS}$ +1)-tes Element für ein $N_{ZC}$ -tes Element in der ZC-Zielsequenz aufeinanderfolgend ein erstes Element für ein $N_{RS}$ -tes Element in der zweiten Untersequenz ist.

8. Übertragungsendgerät nach Anspruch 7, wobei ein s-ter Unterträger von $N_{LS}$ Unterträgern auf einer linken Seite des Gleichstrom-Unterträgers ein s-tes Element in der ersten Untersequenz trägt, ein t-ter Unterträger in den $N_{RS}$ Unterträgern auf einer rechten Seite des Gleichstrom-Unterträgers ein t-tes Element in der zweiten Untersequenz trägt, ein $N_{LS}$ -ter Unterträger in den $N_{LS}$ Unterträgern zu dem Gleichstrom-Unterträger benachbart ist, wobei s = 1,..., $N_{LS}$ und ein erster Unterträger in den $N_{RS}$ Unterträgern zu dem Gleichstrom-Unterträger benachbart ist, wobei t = 1, ..., $N_{RS}$.

9. Kommunikationssystem, umfassend ein Übertragungsendgerät (10) nach einem der Ansprüche 5 bis 8 und ein Empfangsendgerät (20);
das Empfangsendgerät umfassend:

einen Sender-Empfänger (21), der konfiguriert ist, um eine Kanalschätzungs-Trainingssequenz von dem Übertragungsendgerät zu empfangen, wobei die Kanalschätzungs-Trainingssequenz eine erste Untersequenz und eine zweite Untersequenz umfasst, die erste Untersequenz einige Elemente in einer ZC-Zielsequenz umfasst, die zweite Untersequenz andere Elemente als die einigen Elemente in der ZC-Zielsequenz umfasst, und ein Unterträger, der die erste Untersequenz trägt, und ein Unterträger, der die zweite Untersequenz trägt, sich jeweils an zwei Seiten eines Gleichstrom-Unterträgers befinden; und
einen Prozessor (22), der konfiguriert ist, um eine Kanalschätzung basierend auf der Kanalschätzungs-Trainingssequenz durchzuführen.

10. Computerlesbares Medium, umfassend eine Anweisung, wobei, wenn die Anweisung auf einem Computer ausgeführt wird, der Computer das Verfahren nach einem der Ansprüche 1 bis 4 durchführt.

**Revendications**

1. Procédé, comprenant les étapes consistant à :

générer (S110) une séquence d'apprentissage d'estimation de canal, la séquence d'apprentissage d'estimation de canal comprenant une première sous-séquence et une deuxième sous-séquence, la première sous-séquence comprenant certains éléments dans une séquence de Zadoff-Chu (ZC) cible et la deuxième sous-séquence comprenant des éléments autres que les certains éléments dans la séquence ZC cible ; et
envoyer (S120) la séquence d'apprentissage d'estimation de canal, une sous-porteuse qui transporte la première sous-séquence et une sous-porteuse qui transporte la deuxième sous-séquence étant situées respectivement de deux côtés d'une sous-porteuse en courant continu ;
le procédé comprenant en outre, avant la génération (S110) de la séquence d'apprentissage d'estimation de canal, les étapes consistant à :

déterminer une séquence racine ZC sur la base du nombre de canaux liés ;
réaliser un traitement de décalage de phase sur la séquence racine ZC pour obtenir une matrice de séquences d'apprentissage d'estimation de canal, la matrice de séquences d'apprentissage d'estimation de canal comprenant M séquences ZC avec chacune une longueur de $N_{ZC}$, une $i^e$ séquence ZC parmi les M séquences ZC formant une $i^e$ rangée de la matrice de séquences d'apprentissage d'estimation de canal, la $i^e$ séquence ZC parmi les M séquences ZC étant orthogonale à une $j^e$ séquence ZC, où M est un entier positif qui est supérieur ou égal à un nombre d'antennes d'émission et qui est inférieur ou égal à $N_{ZC}$, i = 1, ..., M, j = 1, ..., M et i ≠ j, un facteur de décalage de phase du traitement de décalage de phase étant $e^{j\frac{2\pi lk}{N_{ZC}}}$, où $l$ = 1, ..., M et $k$ = 0, ..., $N_{ZC}$ - 1 ; et déterminer qu'une rangée de la matrice de séquences d'apprentissage d'estimation de canal est la séquence ZC cible.

2. Procédé selon la revendication 1, dans lequel la séquence d'apprentissage d'estimation de canal comprend en outre une troisième sous-séquence, une quatrième sous-séquence et une cinquième sous-séquence, des éléments dans la troisième sous-séquence, la quatrième sous-séquence et la cinquième sous-séquence sont des valeurs prédéfinies, une sous-porteuse qui transporte la troisième sous-séquence est une sous-porteuse en bande de garde d'un côté gauche de la sous-porteuse qui transporte la première sous-séquence, une sous-porteuse qui transporte la quatrième sous-séquence est une sous-porteuse en bande de garde d'un côté droit de la sous-porteuse qui transporte la deuxième sous-séquence, et une sous-porteuse qui transporte la cinquième sous-séquence est la sous-porteuse en courant continu.

3. Procédé selon la revendication 1, dans lequel une longueur de la première sous-séquence est $N_{LS}$, une longueur de la deuxième sous-séquence est $N_{RS}$, et $N_{LS}$ et $N_{RS}$ sont des entiers positifs,
dans lequel un premier élément à un $N_{LS}^e$ élément dans la séquence ZC cible sont successivement un premier élément à un $N_{LS}^e$ élément dans la première sous-séquence, et un $(N_{LS} + 1)^e$ élément à un $N_{ZC}^e$ élément dans la séquence ZC cible sont successivement un premier élément à un $N_{RS}{}^e$ élément dans la deuxième sous-séquence.

4. Procédé selon la revendication 3, dans lequel une $s^e$ sous-porteuse parmi $N_{LS}$ sous-porteuses d'un côté gauche de la sous-porteuse en courant continu transporte un $s^e$ élément dans la première sous-séquence, une $t^e$ sous-porteuse parmi $N_{RS}$ sous-porteuses d'un côté droit de la sous-porteuse en courant continu transporte un $t^e$ élément dans la deuxième sous-séquence, une $N_{LS}{}^e$ sous-porteuse parmi les $N_{LS}$ sous-porteuses est adjacente à la sous-porteuse en courant continu, où s = 1, ..., $N_{LS}$, et une première sous-porteuse parmi les $N_{RS}$ sous-porteuses est adjacente à la sous-porteuse en courant continu, où t = 1, ..., $N_{RS}$.

5. Dispositif terminal d'émission (10), comprenant :

   un processeur (11), configuré pour déterminer une séquence d'apprentissage d'estimation de canal, la séquence d'apprentissage d'estimation de canal comprenant une première sous-séquence et une deuxième sous-séquence, la première sous-séquence comprenant certains éléments dans une séquence de Zadoff-Chu (ZC) cible et la deuxième sous-séquence comprenant des éléments autres que les certains éléments dans la séquence ZC cible ; et
   un émetteur-récepteur (12), configuré pour envoyer la séquence d'apprentissage d'estimation de canal, une sous-porteuse qui transporte la première sous-séquence et une sous-porteuse qui transporte la deuxième sous-séquence étant situées respectivement de deux côtés d'une sous-porteuse en courant continu ;
   le processeur étant en outre configuré pour :

   déterminer une séquence racine ZC sur la base du nombre de canaux liés ;
   réaliser un traitement de décalage de phase sur la séquence racine ZC pour obtenir une matrice de séquences d'apprentissage d'estimation de canal, la matrice de séquences d'apprentissage d'estimation de canal comprenant M séquences ZC avec chacune une longueur de $N_{ZC}$, une $i^e$ séquence ZC parmi les M séquences ZC formant une $i^e$ rangée de la matrice de séquences d'apprentissage d'estimation de canal, la $i^e$ séquence ZC parmi les M séquences ZC étant orthogonale à une $j^e$ séquence ZC, où M est un entier positif qui est supérieur ou égal à un nombre d'antennes d'émission et qui est inférieur ou égal à $N_{ZC}$, i = 1, ..., M, j = 1, ..., M et i ≠ j, un facteur de décalage de phase du traitement de décalage de phase étant $e^{j\frac{2\pi lk}{N_{ZC}}}$, où $l$ = 1, ..., M et $k$ = 0, ..., $N_{ZC}$ - 1 ; et déterminer qu'une rangée de la matrice de séquences d'apprentissage d'estimation de canal est la séquence ZC cible.

6. Dispositif terminal d'émission selon la revendication 5, dans lequel la séquence d'apprentissage d'estimation de canal comprend en outre une troisième sous-séquence, une quatrième sous-séquence et une cinquième sous-séquence, des éléments dans la troisième sous-séquence, la quatrième sous-séquence et la cinquième sous-séquence sont des valeurs prédéfinies, une sous-porteuse qui transporte la troisième sous-séquence est une sous-porteuse en bande de garde d'un côté gauche de la sous-porteuse qui transporte la première sous-séquence, une sous-porteuse qui transporte la quatrième sous-séquence est une sous-porteuse en bande de garde d'un côté droit de la sous-porteuse qui transporte la deuxième sous-séquence, et une sous-porteuse qui transporte la cinquième sous-séquence est la sous-porteuse en courant continu.

7. Dispositif terminal d'émission selon la revendication 5, dans lequel une longueur de la première sous-séquence est $N_{LS}$, une longueur de la deuxième sous-séquence est $N_{RS}$, et $N_{LS}$ et $N_{RS}$ sont des entiers positifs, dans lequel un premier élément à un $N_{LS}{}^e$ élément dans la séquence ZC cible sont successivement un premier élément à un $N_{LS}{}^e$ élément dans la première sous-séquence, et un $(N_{LS} + 1)^e$ élément à un $N_{ZC}{}^e$ élément dans la séquence ZC cible sont successivement un premier élément à un $N_{RS}{}^e$ élément dans la deuxième sous-séquence.

8. Dispositif terminal d'émission selon la revendication 7, dans lequel une $s^e$ sous-porteuse parmi $N_{LS}$ sous-porteuses d'un côté gauche de la sous-porteuse en courant continu transporte un $s^e$ élément dans la première sous-séquence, une $t^e$ sous-porteuse parmi $N_{RS}$ sous-porteuses d'un côté droit de la sous-porteuse en courant continu transporte un $t^e$ élément dans la deuxième sous-séquence, une $N_{LS}{}^e$ sous-porteuse parmi les $N_{LS}$ sous-porteuses est adjacente à la sous-porteuse en courant continu, où s = 1, .., $N_{LS}$, et une première sous-porteuse parmi les $N_{RS}$ sous-porteuses est adjacente à la sous-porteuse en courant continu, où t = 1, ..., $N_{RS}$.

9. Système de communication comprenant un dispositif terminal d'émission (10) selon l'une quelconque des revendications 5 à 8 et un dispositif terminal de réception (20) ; le dispositif terminal de réception comprenant :

un émetteur-récepteur (21), configuré pour recevoir une séquence d'apprentissage d'estimation de canal en provenance du dispositif terminal d'émission, la séquence d'apprentissage d'estimation de canal comprenant une première sous-séquence et une deuxième sous-séquence, la première sous-séquence comprenant certains éléments dans une séquence ZC cible, la deuxième sous-séquence comprenant des éléments autres que les certains éléments dans la séquence ZC cible, et une sous-porteuse qui transporte la première sous-séquence et une sous-porteuse qui transporte la deuxième sous-séquence étant situées respectivement de deux côtés d'une sous-porteuse en courant continu ; et
un processeur (22), configuré pour réaliser une estimation de canal sur la base de la séquence d'apprentissage d'estimation de canal.

10. Support lisible par ordinateur, comprenant une instruction, dans lequel lorsque l'instruction est exécutée sur un ordinateur, l'ordinateur réalise le procédé selon l'une quelconque des revendications 1 à 4.

```
┌─────────────────────┐                              ┌─────────────────────┐
│  Transmit end device │                              │  Receive end device  │
└─────────────────────┘                              └─────────────────────┘
          │                                                      │
┌─────────────────────┐                                         │
│  S110. Generate a channel │                                   │
│  estimation training sequence │                               │
└─────────────────────┘                                         │
          │         S120. Send the channel                      │
          │─────── estimation training sequence ──────────────▶ │
          │                                                      │
          │                              ┌──────────────────────────────┐
          │                              │  S130. Receive the channel     │
          │                              │  estimation training sequence  │
          │                              └──────────────────────────────┘
          │                                                      │
          │                              ┌──────────────────────────────┐
          │                              │  S140. Perform channel estimation │
          │                              │  based on the channel estimation  │
          │                              │  training sequence               │
          │                              └──────────────────────────────┘
          │                                                      │
```

FIG. 1

$$b_0^q, \quad b_1^q, \ldots b_{N_{LS}-1}^q \qquad\qquad b_{N_{LS}}^q, \quad b_{N_{LS}+1}^q, \ldots b_{N_{ZC}-1}^q$$

| $N_{LG}$ | $N_{LS}$ | $N_{DC}$ | $N_{RS}$ | $N_{RG}$ |

$$N_{SD}$$

FIG. 2

FIG. 3

| $CP_j(m)$ | $M_j(m)$ |
|---|---|

FIG. 4

| Zeroes (1:78) | $b_0^q, \ b_1^q, \ldots b_{N_{LS}-1}^q$ | 0, 0, 0 | $b_{N_{LS}}^q, \ b_{N_{LS}+1}^q, \ldots b_{N_{ZC}-1}^q$ | Zeroes (1:79) |
|---|---|---|---|---|

FIG. 5

FIG. 6

FIG. 7

FIG. 8

FIG. 9

FIG. 10

FIG. 11

| Zeroes (1:127) | $b_0^q, \quad b_1^q, \ldots b_{N_{LS}-1}^q$ | 0, 0, 0 | $b_{N_{LS}}^q, \quad b_{N_{LS}+1}^q, \ldots b_{N_{ZC}-1}^q$ | Zeroes (1:128) |
|---|---|---|---|---|

FIG. 12

FIG. 13

FIG. 14

FIG. 15

FIG. 16

FIG. 17

FIG. 18

| Zeroes (1:176) | $b_0^q, \quad b_1^q, \ldots b_{N_{LS}-1}^q$ | $0, 0, 0$ | $b_{N_{LS}}^q, \quad b_{N_{LS}+1}^q, \ldots b_{N_{ZC}-1}^q$ | Zeroes (1:177) |
|---|---|---|---|---|

FIG. 19

FIG. 20

FIG. 21

FIG. 22

FIG. 23

FIG. 24

FIG. 25

| Zeroes (1:224) | $b_0^q, \quad b_1^q, \ldots b_{N_{LS}-1}^q$ | 0, 0, 0 | $b_{N_{LS}}^q, \quad b_{N_{LS}+1}^q, \ldots b_{N_{ZC}-1}^q$ | Zeroes (1:225) |
|---|---|---|---|---|

FIG. 26

X: 1
Y: 1596

FIG. 27

FIG. 28

FIG. 29

FIG. 30

FIG. 31

FIG. 32

FIG. 33

Receive end device 20

Transceiver module 21

Processing module 2

**FIG. 34**

Transmit end device 100

Processor 110

Transceiver 120

Memory 130

**FIG. 35**

Receive end device 200

Processor 210

Transceiver 220

Memory 230

**FIG. 36**

**REFERENCES CITED IN THE DESCRIPTION**

**Patent documents cited in the description**

- US 2016080127 A1

- US 2012147997 A1

**Non-patent literature cited in the description**

- **ARTYOM LOMAYEV.** Channel Estimation Field for EDMG OFDM PHY in 11ay. *IEEE DRAFT,* 21 April 2017, 1-18